# EUROPEAN PATENT SPECIFICATION

(11) **EP 3 002 321 B1**
(45) Date of publication and mention of the grant of the patent: **26.10.2022**
(21) Application number: 15184876.9
(22) Date of filing: 11.09.2015
(51) Int. Cl.: C09D 11/101, B41M 5/00, B41M 5/50, B41M 5/52, B41J 11/00, C09D 11/30, C09D 133/00, C09D 4/00

(54) **UNDERCOAT COMPOSITION, COMPOSITION SET, INKJET RECORDING METHOD, AND PRINTED MATERIAL**
UNTERSCHICHTZUSAMMENSETZUNG, TINTENSTRAHLAUFZEICHNUNGSVERFAHREN UND BEDRUCKTES MATERIAL
COMPOSITION DE SOUS-COUCHE, ENSEMBLE DE COMPOSITIONS, PROCÉDÉ D'ENREGISTREMENT À JET D'ENCRE ET MATÉRIAU IMPRIMÉ

(30) Priority: 30.09.2014 JP 2014202205
(43) Date of publication of application: 06.04.2016
(73) Proprietor: FUJIFILM Corporation, Tokyo 106-8620 (JP)
(72) Inventor: ARAKI, Kenjiro, Ashigarakami-gun, Kanagawa (JP)
(74) Representative: Klunker IP Patentanwälte PartG mbB

(56) References cited:
- WO-A1-2013/012031
- US-A- 5 703 141
- US-A1- 2010 086 725

## Description

The present invention relates to an undercoat composition, a composition set, an inkjet recording method, and a printed material. The present invention also relates to the use of an undercoat composition in an inkjet recording method.

As image recording methods for forming an image on a recording medium such as paper based on an image data signal, there are an electrophotographic system, sublimation type and melt type thermal transfer systems, an inkjet system, etc.

With regard to the inkjet system, the printing equipment is inexpensive, it is not necessary to use a plate when printing, and since an image is formed directly on a recording medium by discharging an ink composition only on a required image area, the ink composition can be used efficiently and the running cost is low, particularly in the case of small lot production. Furthermore, there is little noise and it is excellent as an image recording system, and has been attracting attention in recent years.

Among them, an inkjet recording ink composition (radiation-curing inkjet recording ink composition), which is curable upon exposure to radiation such as UV rays, is an excellent system from the viewpoint of it being possible to print on various types of recording media because, compared with a solvent-based ink composition, the drying properties are excellent and an image is resistant to spreading since the majority of the components in the ink composition cure upon exposure to radiation such as UV rays.

Printing of flexible packaging has mainly been carried out by conventional printing methods such as gravure printing or flexographic printing. However, in recent years digital printing, which is capable of responding to the increase in small lot printing, has also been attracting attention in the field of flexible packaging. In the case of digital printing, it is unnecessary to prepare a plate, it is also unnecessary to carry out color matching, and particularly when small lots are printed, it is possible to reduce the cost and reduce the time for preparation, thus contributing to shortening of the printing time.

As conventional inkjet recording methods, methods described in JP-A-9-175009 (JP-A denotes a Japanese unexamined patent application publication) and JP-A-2012-125978 can be cited.

It is an object of the present invention to provide an undercoat composition that has excellent coating properties and can give a printed material having excellent adhesion and blocking inhibition, a composition set, and an inkjet recording method and a printed material that employ the undercoat composition.

The object of the present invention is defined in the present claims.

In accordance with the present invention, there can be provided an undercoat composition that has excellent coating properties and can give a printed material having excellent adhesion and blocking inhibition, a composition set, and an inkjet recording method and a printed material that employ the undercoat composition.

### Brief Description of Drawings

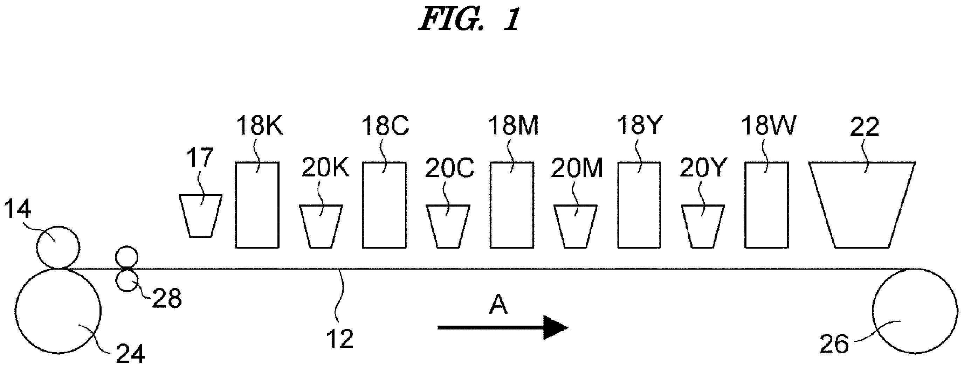

FIG. 1: A schematic drawing showing one example of inkjet recording equipment suitably used in the present invention.

### Explanation of Reference Numerals and Symbols

12: recording medium, 14: undercoat composition coating roller, 17: exposure light source for semi-curing undercoat composition, 18K, 18C, 18M, 18Y, 18W: inkjet head, 20K, 20C, 20M, 20Y: exposure light source for semi-curing, 22: nitrogen-purged exposure light source unit, 24: outfeed roller, 26: wind-up roller, 28: nip roll

### (Undercoat composition)

The undercoat composition of the present invention comprises an isocyanate group-containing compound as Component A, a radically polymerizable monomer containing at least b1 or b3 below as Component B, and a photopolymerization initiator as Component C, wherein the total content of b1 and b2 is 50 to 90 mass% relative to the total solids content mass of the undercoat composition, and the total content of b1 and b3 is 5 to 90 mass% relative to the total solids content mass of the undercoat composition.
b1: a polyfunctional radically polymerizable monomer having a Log P value of no greater than 2.0
b2: a polyfunctional radically polymerizable monomer having a Log P value of greater than 2.0
b3: a monofunctional radically polymerizable monomer having a Log P value of no greater than 2.0

The total solids content mass of the composition referred to here has the same meaning as the mass of nonvolatile components, and means the mass obtained by excluding volatile components such as solvent from the total mass of the composition.

The present inventors have found that in food package printing for flexible packaging in particular, when an image is formed by a conventional inkjet recording method, there is the problem that the adhesion and blocking inhibition of an image are insufficient. As a result of an intensive investigation by the present inventors, it has been found that by including an isocyanate group-containing compound, a specific radically polymerizable monomer, and a radical polymerization initiator, it is possible to provide an undercoat composition that has excellent coating properties and that can give a printed material having excellent adhesion and blocking inhibition, a composition set, and an inkjet recording method and a printed material that employ the undercoat composition.

Although the detailed mechanism is unclear, it is surmised that since the isocyanate compound in the undercoat layer reacts with moisture contained in the monomer as an impurity or a hydroxy group of the monomer to thus form a urea bond or a urethane bond having high cohesive strength, the image that is formed has good adhesion and excellent blocking inhibition. Furthermore, when a recording medium that has been made hydrophilic by for example a corona treatment, etc. is used, since aggregation occurs due to a reaction between an isocyanate group and a hydroxy group, etc. on a recording medium, the coating precision is generally poor. However, it is surmised that, due to the use of a monomer having a low Log P (hydrophilic) as a radically polymerizable monomer, the isocyanate group reacts with the monomer having a low Log P value, and a reaction between the isocyanate group and a hydroxy group on the recording medium is suppressed, thus enabling good coating properties to be achieved.

In the present specification, 'A to B', which expresses a numerical range, has the same meaning as 'at least A but no greater than B'. Furthermore, 'as step a an application step of providing an undercoat layer by applying an undercoat composition onto a recording medium' is also called simply 'step a'.

Furthermore, in the present invention, 'mass%' and 'wt%' have the same meaning, and 'parts by mass' and 'parts by weight' have the same meaning.

Moreover, in the present invention '(meth)acrylate' means both or either of 'acrylate' and 'methacrylate', and '(meth)acrylic' means both or either of 'acrylic' and 'methacrylic'.

In the present invention, combinations of preferable embodiments described below are more preferable.

The present invention is explained in detail below.

### <Component A: isocyanate group-containing compound>

As Component A used in the undercoat composition of the present invention, a known isocyanate compound may be used without particular limitation. It may be either an aliphatic or aromatic isocyanate, but it is preferably an aliphatic isocyanate from the viewpoint of safety and stability.

Component A used in the present invention is preferably a polyfunctional isocyanate compound from the viewpoint of adhesion, and is preferably a diisocyanate compound.

Examples of the polyfunctional isocyanate compound include 2,4-tolylene diisocyanate, 2,6-tolylene diisocyanate, isophorone diisocyanate, 1,6-hexamethylene diisocyanate, 1,3-trimethylene diisocyanate, 1,4-tetramethylene diisocyanate, 2,2,4-trimethylhexamethylene diisocyanate, 2,4,4-trimethylhexamethylene diisocyanate, 1,9-nonamethylene diisocyanate, 1,10-decamethylene diisocyanate, 1,4-cyclohexane diisocyanate, 2,2'-diethyl ether diisocyanate, diphenylmethane-4,4'-diisocyanate, o-xylene diisocyanate, m-xylene diisocyanate, p-xylene diisocyanate, methylene bis(cyclohexyl isocyanate), cyclohexane-1,3-dimethylene diisocyanate, cyclohexane-1,4-dimethylene diisocyanate, 1,5-naphthalene diisocyanate, p-phenylene diisocyanate, 3,3'-methyleneditolylene-4,4'-diisocyanate, 4,4'-diphenyl ether diisocyanate, tetrachlorophenylene diisocyanate, norbornane diisocyanate, hydrogenated 1,3-xylylene diisocyanate, hydrogenated 1,4-xylylene diisocyanate, multimers of these compounds, an isocyanate group-containing urethane ester resin, and an isocyanate group-containing polyether urethane resin.

Preferred examples of Component A include a multimer of a polyfunctional isocyanate compound, an isocyanate group-containing urethane ester resin, and an isocyanate group-containing polyether urethane resin.

Examples of the multimer of a polyfunctional isocyanate compound include a biuret, an isocyanurate, an allophanate, and an adduct.

The polyol compound used for the adduct is not particularly limited, and trimethylolpropane can be cited as a preferred example.

Furthermore, as Component A used in the present invention, a commercial product may be used.

Preferred examples include the Takenate series such as Takenate D103H, D204, D160N, D170N, D165N, D178NL, and D110N (Mitsui Chemical Co., Ltd.) and Coronate HX, HXR, HXL, HXLV, HK, HK-T, HL, and 2096 (Nippon Polyurethane Industry Co., Ltd.).

Furthermore, a commercially available two-component adhesive comprising an isocyanate compound and a polyol compound, which is described later, such as TM-550 and CAT-RT-37-2K (Toyo-Morton, Ltd.), or an X series solvent-free adhesive such as XC233-2 and XA126-1 (Dainichiseika Color & Chemicals Mfg. Co., Ltd.) may also be used.

The amount of isocyanate compound added is preferably 2 to 50 mass% relative to the total mass of the undercoat composition, more preferably 5 to 40 mass%, and yet more preferably 10 to 20 mass%.

### <Component B: radically polymerizable monomer>

Component B used in the undercoat composition of the present invention comprises at least b1 or b3.

Component B may comprise b2 and/or b4 below.
b2: a polyfunctional radically polymerizable monomer having a Log P value of greater than 2.0
b4: a monofunctional radically polymerizable monomer having a Log P value of greater than 2.0

The Log P value of a radically polymerizable monomer may be determined by a method described in J. Chem. Inf. Comput. Sci. 1987, 27, 21-35. The same value can also be calculated from Chemical Properties in ChemDraw Software (ChemBioDraw Ultra 12.0 at the time of filing of the present application).

Preferred embodiments of b1 to b4 are explained below.

In the present invention, a monomer means a radically polymerizable compound having a viscosity at room temperature (25°C) of less than 0.1 Pa·s. The monomer preferably has a molecular weight (weight-average molecular weight when there is molecular weight distribution) of less than 1,000.
b1: polyfunctional radically polymerizable monomer having Log P value of no greater than 2.0

In the present invention, Component B preferably comprises as b1 a polyfunctional radically polymerizable monomer having a Log P value of no greater than 2.0.

The b1 used in the present invention is preferably a polyfunctional ethylenically unsaturated compound, more preferably a polyfunctional (meth)acrylate compound, and particularly preferably a polyfunctional acrylate compound.

Furthermore, b1 is preferably a di- to penta-functional ethylenically unsaturated compound, more preferably a di- to tetra-functional ethylenically unsaturated compound, and yet more preferably a difunctional ethylenically unsaturated compound.

A diacrylate monomer is suitably used since it has low viscosity and excellent reactivity.

b1 preferably comprises a hydroxy group from the viewpoint of curability.

Specific examples of difunctional (meth)acrylate compounds suitably used as b1 include polyester diacrylate, polyethylene glycol diacrylate, triethylene glycol diacrylate, diethylene glycol diacrylate, pentaerythritol triacrylate, dipropylene glycol diacrylate, tripropylene glycol diacrylate, dipentaerythritol pentaacrylate, tri(1,2-propylene glycol) diacrylate, and pentaerythritol tetraacrylate.

A commercial product may be used as b1, and examples include SR606 (Log P value: -0.21), SR344 (Log P value: 0.36), SR272 (Log P value: 0.72), SR230 (Log P value: -0.88), SR444 (Log P value: 1.04), SR508 (Log P value: 1.52), SR306 (Log P value: 1.69), SR399 (Log P value: 1.81), TPGDA (Log P value: 1.84), and SR295 (Log P value: 1.96) (all from Sartomer).

It is more preferable for the Log P value of b1 to be no greater than 1.5. It is also preferable for the Log P value of b1 to be at least -2.0, and it is more preferable for it to be at least -1.0.

The content of b1 relative to the total solids content mass of the undercoat composition is preferably 1 to 30 mass%, more preferably 2 to 20 mass%, and yet more preferably 3 to 15 mass%.
b2: polyfunctional radically polymerizable monomer having Log P value of greater than 2.0

In the present invention, Component B preferably comprises as b2 a polyfunctional radically polymerizable monomer having a Log P value of greater than 2.0. The Log P value of b2 is preferably no greater than 10, and more preferably no greater than 5.0.

The b2 used in the present invention is preferably a polyfunctional ethylenically unsaturated compound, preferably a polyfunctional (meth)acrylate compound, and more preferably a polyfunctional acrylate compound.

Furthermore, b2 is preferably a di- to penta-functional ethylenically unsaturated compound, more preferably a di- to tetra-functional ethylenically unsaturated compound, and yet more preferably a difunctional ethylenically unsaturated compound.

A diacrylate monomer is suitably used since it has low viscosity and excellent reactivity.

Preferred examples of b2 include a di(meth)acrylic acid ester of an aliphatic hydrocarbon diol having 6 to 12 carbons (difunctional (meth)acrylate compound). The hydrocarbon diol may be any of a straight-chain hydrocarbon diol, a branched hydrocarbon diol, and a cyclic hydrocarbon diol, and preferred examples include a straight-chain hydrocarbon diol and a branched hydrocarbon diol.

A di(meth)acrylic acid ester of an aliphatic hydrocarbon diol having 6 to 12 carbons is preferable since it has low viscosity and it has relatively low odor.

Preferred examples of the di(meth)acrylic acid ester of an aliphatic hydrocarbon diol having 6 to 12 carbons include 1,6-hexanediol di(meth)acrylate, 1,7-heptanediol di(meth)acrylate, 1,8-octanediol di(meth)acrylate, 1,9-nonanediol di(meth)acrylate, 1,10-decanediol di(meth)acrylate, 1,12-dodecanediol di(meth)acrylate, 3-methyl-1,5-pentanediol di(meth)acrylate, 2-n-butyl-2-ethyl-1,3-propanediol di(meth)acrylate, cyclohexanedimethanol di(meth)acrylate, and tricyclodecanedimethanol di(meth)acrylate.

Among them it is more preferably hexanediol diacrylate, nonanediol diacrylate, and/or 3-methyl-1,5-pentanediol dimethacrylate, and yet more preferably 3-methyl-1,5-pentanediol diacrylate.

In the present invention, a (meth)acrylate monomer means a compound having at least one (meth)acryloyloxy group per molecule and having a viscosity at room temperature (25°C) of less than 0.1 Pa·s. When the viscosity is within this range, a balance can be achieved between reactivity and suppression of migration and odor of a printed material.

Alternatively, preferred specific examples of the difunctional (meth)acrylate compound suitably used as b2 include hepta(1,2-propylene glycol) di(meth)acrylate and propoxylated (2) neopentyl glycol di(meth)acrylate (di(meth)acrylate of the adduct of 2 moles of ethylene oxide and neopentyl glycol).

Preferred examples of tri- or higher-functional (meth)acrylate compounds include ethoxylated (3) trimethylolpropane tri(meth)acrylate (tri(meth)acrylate of the adduct of 3 moles of ethylene oxide and trimethylolpropane), trimethylolpropane tri(meth)acrylate, and dipentaerythritol hexa(meth)acrylate.

A commercial product may be used as b2, and preferred examples include SR454 (Log P value: 2.05), ADP600 (Log P value: 2.33), SR341 (Log P value: 2.34), SR238 (Log P value: 2.43), TMPTA (SR351) (Log P value: 2.52), A-DPH (Log P value: 2.72), SR9003 (Log P value: 2.58), and NDA (Log P value: 3.68) (all from Sartomer).

The content of b2 relative to the total solids content mass of the undercoat composition is preferably 0 to 80 mass%, more preferably 35 to 75 mass%, and yet more preferably 40 to 70 mass%.
b3: monofunctional radically polymerizable monomer having Log P value of no greater than 2.0

In the present invention, Component B may comprise as b3 a monofunctional radically polymerizable monomer having a Log P value of no greater than 2.0.

b3 preferably comprises a hydroxy group.

Examples of b3 include a monofunctional (meth)acrylate compound, a monofunctional (meth)acrylamide compound, a monofunctional aromatic vinyl compound, a monofunctional vinyl ether compound, and a monofunctional *N-*vinyl compound (*N*-vinylcaprolactam, etc.).

Preferred examples of compounds as b3 include hydroxyethyl (meth)acrylate, γ-butyrolactone (meth)acrylate, carboxyethyl (meth)acrylate, *N*,*N*-dimethylamino (meth)acrylate, ethoxyethoxyethyl (meth)acrylate, 4-hydroxybutyl (meth)acrylate, cyclic trimethylolpropane formal (meth)acrylate, tetrahydrofurfuryl (meth)acrylate, (3-ethyloxetan-3-yl)methyl (meth)acrylate, (2-methyl-2-ethyl-1,3-dioxolan-4-yl)methyl (meth)acrylate, *N,N-*dimethyl(meth)acrylamide, *N*-isopropyl(meth)acrylamide, and *N-*vinylcaprolactam.

A commercial product may be used as b3, and preferred examples include ACMO (Log P value: -0.2), NIPAM (Log P value: 0.62), and DMAEA (Log P value: 0.2) (all from Kohjin Co., Ltd.), HEA (Log P value: 0.12), DMA (Log P value: 0.64), 4-HBA (Log P value: 0.68), and CEA (Log P value: 0.2) (all from Tokyo Chemical Industry Co., Ltd.), GBLA (Log P value: 0.19), Oxe-10 (Log P value: 1.33), and MEDOL (Log P value: 1.52) (all from Osaka Organic Chemical Industry Ltd.), SR256 (Log P value: 0.67) and SR285 (Log P value: 0.78) (both from Sartomer), and NVC (Log P value: 1.08) (BASF).

The Log P value of b3 is preferably at least -2.0, and more preferably at least -1.0.

More specifically, a radically polymerizable monomer having a Log P value of no greater than 2.0 in commercially available or industrially known radically polymerizable or crosslinking monomers, oligomers, and polymers, such as those described in 'Kakyozai Handobukku' (Crosslinking Agent Handbook), Ed. S. Yamashita (Taiseisha, 1981); 'UV/EB Koka Handobukku (Genryo)' (UV/EB Curing Handbook (Starting Materials)) Ed. K. Kato (Kobunshi Kankoukai, 1985); 'UV/EB Koka Gijutsu no Oyo to Shijyo' (Application and Market of UV/EB Curing Technology), p. 79, Ed. RadTech (CMC, 1989); and E. Takiyama 'Poriesuteru Jushi Handobukku' (Polyester Resin Handbook), (The Nikkan Kogyo Shimbun Ltd., 1988) may be used.

The content of b3 relative to the total solids content mass of the undercoat composition is preferably 0 to 40 mass%, more preferably 0 to 30 mass%, and yet more preferably 0 to 20 mass%.
b4: monofunctional radically polymerizable monomer having Log P value of greater than 2.0

In the present invention, Component B may comprise as b4 a monofunctional radically polymerizable monomer having a Log P value of greater than 2.0. The Log P value of b4 is preferably no greater than 10, and more preferably no greater than 5.0.

Examples of b4 include a monofunctional (meth)acrylate compound, a monofunctional (meth)acrylamide compound, a monofunctional aromatic vinyl compound, a monofunctional vinyl ether compound (triethylene glycol divinyl ether, etc.), and a monofunctional *N*-vinyl compound (*N*-vinylcaprolactam, etc.).

Examples of the monofunctional (meth)acrylate compound include isobornyl (meth)acrylate and 2-phenoxyethyl (meth)acrylate.

A commercial product may be used as b4, and preferred examples include SR339 (Log P value: 2.3) and SR506 (Log P value: 3.34) (both from Sartomer).

The content of b4 relative to the total solids content mass of the undercoat composition is preferably 0 to 40 mass%, more preferably 0 to 30 mass%, and yet more preferably 0 to 20 mass%.

The total content of Component B in the undercoat composition is preferably 10 to 80 mass% of the entire composition from the viewpoint of achieving a balance between adhesion and blocking inhibition, preferably 15 to 75 mass%, and more preferably 60 to 72 mass%.

The content of the polyfunctional ethylenically unsaturated compound in the undercoat composition relative to the total content of Component B is preferably at least 70 mass%, more preferably 70 to 100 mass%, and yet more preferably 80 to 100 mass%.

An embodiment in which the undercoat composition of the present invention comprises b1 and b2 and does not comprise b3 and b4 is preferable from the viewpoint of reducing odor.

### <Component C: photopolymerization initiator>

The undercoat composition of the present invention comprises a photopolymerization initiator as Component C.

The photopolymerization initiator is preferably a radical photopolymerization initiator.

Examples of the radical photopolymerization initiator that can be used in the present invention include (a) an aromatic ketone, (b) a phosphine oxide compound, (c) an aromatic onium salt compound, (d) an organic peroxide, (e) a thio compound, (f) a hexaarylbiimidazole compound, (g) a ketoxime ester compound, (h) a borate compound, (i) an azinium compound, (j) a metallocene compound, (k) an active ester compound, (I) a compound having a carbonhalogen bond, (m) an alkylamine compound, etc. With regard to these radical polymerization initiators, the above-mentioned compounds (a) to (m) may be used singly or in combination. Examples of the radical polymerization initiator include compounds described in paragraphs 0090 to 0116 of JP-A-2009-185186.

Component C that can be used in the present invention is preferably used singly or in a combination of two or more types.

Component C is preferably a phosphine oxide compound, an α-hydroxyketone compound, and/or an α-aminoketone compound. Among them, a phosphine oxide compound and/or an α-aminoketone compound is more preferable, and a phosphine oxide compound is yet more preferable.

Preferred examples of the phosphine oxide compound include bis(2,4,6-trimethylbenzoyl)phenylphosphine oxide, bis(2,6-dimethylbenzoyl)phenylphosphine oxide, bis(2,4,6-trimethylbenzoyl)-2-methoxyphenylphosphine oxide, bis(2,6-dimethylbenzoyl)-2-methoxyphenylphosphine oxide, bis(2,4,6-trimethylbenzoyl)-2,4-dimethoxyphenylphosphine oxide, bis(2,6-dimethylbenzoyl)-2,4-dimethoxyphenylphosphine oxide, bis(2,4,6-trimethylbenzoyl)-2,4-dipentyloxyphenylphosphine oxide, bis(2,6-dimethylbenzoyl)-2,4-dipentyloxyphenylphosphine oxide, 2,4,6-trimethylbenzoylethoxyphenylphosphine oxide, 2,6-dimethylbenzoylethoxyphenylphosphine oxide, 2,4,6-trimethylbenzoylmethoxyphenylphosphine oxide, bis(2,6-trimethoxybenzoyl)-2,4,4-trimethmethylpentylphenylphosphine oxide, 2,4,6-trimethylbenzoyldiphenylphosphine oxide (LUCIRIN TPO: manufactured by BASF), 2,6-dimethylbenzoylmethoxyphenylphosphine oxide, 2,4,6-trimethylbenzoyl(4-pentyloxyphenyl)phenylphosphine oxide, and 2,6-dimethylbenzoyl(4-pentyloxyphenyl)phenylphosphine oxide.

Among them, as the phosphine oxide compound, bis(2,4,6-trimethylbenzoyl)phenylphosphine oxide (IRGACURE 819: manufactured by BASF) or bis(2,6-dimethoxybenzoyl)-2,4,4-trimethylpentylphenylphosphine oxide is preferable, and bis(2,4,6-trimethylbenzoyl)phenylphosphine oxide is particularly preferable.

Component C preferably includes an aromatic ketone compound from the viewpoint of curability.

The aromatic ketone compound is preferably an α-hydroxyketone compound and/or an α-aminoketone compound.

As the α-hydroxyketone compound, a known α-hydroxyketone compound may be used, and examples of the α-hydroxyketone compound include 1-[4-(2-hydroxyethoxy)phenyl]-2-hydroxy-2-methyl-1-propan-1-one, 2-hydroxy-2-methyl-1-phenylpropan-1-one, and 1-hydroxycyclohexyl phenyl ketone compound. Among them, 1-hydroxycyclohexyl phenyl ketone compound is preferable. The 1-hydroxycyclohexyl phenyl ketone compound referred to in the present invention means 1-hydroxycyclohexyl phenyl ketone and a compound obtained by substituting 1-hydroxycyclohexyl phenyl ketone with any substituent. The substituent may be selected freely from a range that enables an ability as a radical polymerization initiator to be exhibited, and specific examples thereof include an alkyl group having 1 to 4 carbons.

As the α-aminoketone compound, a known α-aminoketone compound may be used, and examples of the α-aminoketone compound include 2-methyl-1-phenyl-2-morpholinopropan-1-one, 2-methyl-1-[4-(hexyl)phenyl]-2-morpholinopropan-1-one, 2-methyl-1-(4-methylthiophenyl)-2-morpholinopropan-1-one, 2-ethyl-2-dimethylamino-1-(4-morpholinophenyl)butan-1-one, 2-benzyl-2-dimethylamino-1-(4-morpholinophenyl)butan-1-one, and 2-dimethylamino-2-[(4-methylphenyl)methyl]-1-[4-(4-morpholinyl)phenyl]-1-butanone.

Furthermore, a commercial product such as IRGACURE 907 (2-methyl-1-(4-methylthiophenyl)-2-morpholinopropan-1-one), IRGACURE 369 (2-benzyl-2-dimethylamino-1-(4-morpholinophenyl)-1-butanone), or IRGACURE 379 (2-dimethylamino-2-[(4-methylphenyl)methyl]-1-[4-(4-morpholinyl)phenyl]-1-butanone) (BASF) can be cited as a preferred example.

In the present invention, from the viewpoint of suppression of migration and odor, Component C having a weight-average molecular weight of 500 to 3,000 may be used in combination. The weight-average molecular weight is preferably 800 to 2,500, and more preferably 1,000 to 2,000. When the molecular weight is at least 500, an ink composition in which leaching of a compound from a cured film is suppressed and migration, odor, and blocking are suppressed can be obtained. On the other hand, when it is no greater than 3,000, there is little steric hindrance in the molecule, the degree of freedom of a molecule in a liquid/film is maintained, and high sensitivity can be obtained.

The weight-average molecular weight is measured by a GPC method (gel permeation chromatograph method) and determined on a reference polystyrene basis. For example, an HLC-8220 GPC (Tosoh Corporation) is used as a GPC, with three columns of TSKgeL SuperHZM-H, TSKgeL SuperHZ4000, and TSKgeL SuperHZ2000 (4.6 mm ID x 15 cm, Tosoh Corporation) as columns, and THF (tetrahydrofuran) as eluent. The conditions are such that the sample concentration is 0.35 mass%, the flow rate is 0.35 mL/min, the amount of sample injected is 10 µL, the measurement temperature is 40°C, and an IR detector is used. Furthermore, a calibration curve is generated from eight samples of 'reference sample TSK standard, polystyrene', that is, 'F-40', 'F-20', 'F-4', 'F-1', 'A-5000', 'A-2500', 'A-1000', and 'n-propylbenzene' manufactured by Tosoh Corporation.

Examples of radical polymerization initiators having a weight-average molecular weight of 500 to 3,000 as a molecular weight include SPEEDCURE 7010 (1,3-di({α-[1-chloro-9-oxo-9H-thioxanthen-4-yl]oxy}acetylpoly[oxy(1-methylethylene)])oxy)-2,2-bis({α-[1-chloro-9-oxo-9H-thioxanthen-4-yl]oxy}acetylpoly[oxy(1-methylethylene)])oxymethyl)propane, CAS No. 1003567-83-6), OMNIPOL TX (polybutylene glycol bis(9-oxo-9H-thioxanthenyloxy) acetate, CAS No. 813452-37-8), and OMNIPOL BP (polybutylene glycol bis(4-benzoylphenoxy) acetate, CAS No. 515136-48-8). Component C having a weight-average molecular weight of 500 to 3,000 as a molecular weight is preferably 0.01 to 10 mass% of the entire undercoat composition, more preferably 0.05 to 8.0 mass%, yet more preferably 0.1 to 5.0 mass%, and particularly preferably 0.1 to 2.4 mass%. Within this range, the curability is excellent.

From the viewpoint of suppression of migration, odor, and blocking, the content of Component C having a molecular weight of less than 340 in the undercoat composition is preferably either zero or greater than 0 mass% but no greater than 1.0 mass% of the entire undercoat composition, more preferably zero or greater than 0 mass% but no greater than 0.5 mass%, yet more preferably zero or greater than 0 mass% but no greater than 0.3 mass%, and particularly preferably zero.

The undercoat composition preferably comprises, as a radical polymerization initiator, a compound which functions as a sensitizer (hereinafter also calls 'sensitizer') in order to promote decomposition of the radical polymerization initiator by absorbing specific actinic radiation.

Examples of the sensitizer include polynuclear aromatic compounds (e.g. pyrene, perylene, triphenylene, 2-ethyl-9,10-dimethoxy anthracene), xanthenes (e.g. fluorescein, eosin, erythrosine, rhodamine B, rose bengal), cyanines (e.g. thiacarbocyanine, oxacarbocyanine), merocyanines (e.g. merocyanine, carbomerocyanine), thiazines (e.g. thionine, methylene blue, toluidine blue), acridines (e.g. acridine orange, chloroflavin, acriflavine), anthraquinones (e.g. anthraquinone), squaryliums (e.g. squarylium), and coumarins (e.g. 7-diethylamino-4-methylcoumarin), thioxanthones (e.g. isopropylthioxanthone), and thiochromanones (e.g. thiochromanone).

Among them, as a sensitizer, a thioxanthones is preferable, and isopropylthioxanthone is more preferable.

The sensitizer may be used singly or in a combination of two or more compounds.

In the undercoat composition, the total content of Component C is preferably 1.0 to 15.0 mass% relative to the mass of the entire ink composition, more preferably 1.5 to 10.0 mass%, and yet more preferably 2.0 to 8.0 mass%. When in the above-mentioned range, the ink composition having excellent curability is obtained.

### <Component D: binder polymer>

The undercoat composition of the present invention preferably further comprises a binder polymer as Component D. The binder polymer is preferably an inactive resin that does not have a polymerizable group.

As the binder polymer a known binder polymer such as a polyesterbased resin, a polyurethane resin, a vinyl resin, an acrylic resin, or a rubberbased resin may be used, but an acrylic resin is preferable, and an inactive methyl methacrylate homopolymer and/or copolymer is more preferable. Examples include polymethyl methacrylate (molecular weight 10,000, catalog No. 81497; molecular weight 20,000, catalog No. 81498; molecular weight 50,000, catalog No. 81501) and a methyl methacrylate/n-butyl methacrylate copolymer (mass ratio 85/15, molecular weight 75,000; catalog No. 474029) from Aldrich; ELVACITE 2013 (methyl methacrylate/n-butyl methacrylate copolymer, mass ratio 36/64, molecular weight 37,000), 2021, 2614, 4025, 4026, and 4028 from Lucite International; Paraloid DM55 and B66 from Rohm and Haas; and BR113 and 115 from Dianal America.

The weight-average molecular weight (Mw) of Component D is preferably at least 1,000, more preferably 1,000 to 1,000,000, yet more preferably 5,000 to 200,000, and particularly preferably 8,000 to 100,000.

The glass transition temperature (Tg) of Component D is preferably 50°C to 120°C, and more preferably 60°C to 100°C.

With regard to Component D, one type may be used on its own or two or more types may be used in combination.

The content of the binder polymer is preferably 0.2 to 15 mass% of the entire undercoat composition, and more preferably 1 to 10 mass%.

When the content of Component D is within this range, a printed material having excellent blocking inhibition can be obtained.

### <Component E: polymerizable oligomer>

The undercoat composition of the present invention preferably further comprises as Component E a polymerizable oligomer.

An 'oligomer' usually means a polymer having a limited number (usually 5 to 100) of monomer-based constituent units. The weight-average molecular weight of the oligomer is preferably 1,000 to 10,000, more preferably 1,500 to 10,000, and yet more preferably 1,500 to 5,000.

The oligomer is preferably one comprising a polymerizable group as a functional group, more preferably one comprising an ethylenically unsaturated group, and particularly preferably one comprising a (meth)acryloyl group.

The number of functional groups contained in the oligomer is preferably 1 to 15 per molecule from the viewpoint of achieving a balance between flexibility and curability, more preferably 2 to 6, yet more preferably 2 to 4, and particularly preferably 2.

Component E is preferably an oligoester acrylate; among them a urethane acrylate oligomer, a polyester acrylate oligomer, and an epoxy acrylate oligomer are more preferable, and an epoxy acrylate oligomer and a urethane acrylate oligomer are yet more preferable.

Preferred examples of the epoxy acrylate oligomer include an aliphatic epoxy acrylate oligomer, and preferred examples of the urethane acrylate oligomer include an aliphatic urethane acrylate oligomer and an aromatic urethane acrylate oligomer, and more preferably an aliphatic urethane acrylate oligomer.

Due to it comprising Component E, an ink composition having excellent adhesion to a substrate and excellent curability is obtained.

Component E may also be referred to in the Oligomer Handbook (Ed. by Junji Furukawa, The Chemical Daily Co., Ltd.).

Furthermore, the Tg of Component E is preferably 50°C to 120°C, and more preferably 60°C to 100°C.

Examples of commercially available polyfunctional acrylate oligomers include those shown below.

As the urethane acrylate oligomer, examples include the EBECRYL series manufactured by Daicel-Cytec Company Ltd. (e.g. EBECRYL 210, 230, 244, 270, 4858, 8402, 9270), U-200PA, UA122P, UA160TM, and U108A manufactured by Shin-Nakamura Chemical Co., Ltd., UV2000B, UV3000B, UV3200B, UV3310B, and UV3700B manufactured by The Nippon Synthetic Chemical Industry Co., Ltd., and CN9006 and C9007 manufactured by Sartomer Company Inc.

As the polyester acrylate oligomer, examples include the EBECRYL series manufactured by Daicel-Cytec Company Ltd. (e.g. EBECRYL 812, 853, 884, etc.).

As the epoxy acrylate, examples include the EBECRYL series manufactured by Daicel-Cytec Company Ltd. (e.g. EBECRYL 3708, etc.) and CN2003 manufactured by Sartomer Company Inc.

With regard to Component E, one type may be used on its own or two or more types may be used in combination.

The content of Component E is preferably 0.1 to 40 mass% of the entire undercoat composition, more preferably 1 to 20 mass%, and yet more preferably 3 to 15 mass%.

When the content of Component E is within this range, a printed material having excellent curability can be obtained.

From the viewpoint of the curability and coating properties of the undercoat composition, the total content of Component D and Component E is preferably 2 to 30 mass% relative to the total solids content mass of the undercoat composition, more preferably 3 to 25 mass%, and yet more preferably 5 to 20 mass%.

### <Polyol compound>

The undercoat composition used in the present invention may comprise a polyol compound.

The polyol compound is preferably a diol compound.

The polyol compound is not particularly limited, but a commercial product available in a two-component adhesive comprising an isocyanate compound and a polyol compound can be used, such as CAT-RT-37-2K (Toyo-Morton, Ltd.) where the isocyanate compound is TM-550, or an X series solvent-free adhesive such as XA126-1 (Dainichiseika Color & Chemicals Mfg. Co., Ltd.) where the isocyanate compound is XC233-2.

When the undercoat composition used in the present invention comprises a polyol compound, the content of the polyol compound relative to the total mass of the undercoat composition is preferably 5 to 50 mass%, and more preferably 10 to 40 mass%.

### <Colorant>

The undercoat composition of the present invention may comprise a colorant, preferably comprises a white colorant or does not comprise one, and more preferably does not comprise one.

As the white pigment, Pigment White 6, 18, 21, etc. may be used according to the intended application.

Furthermore, when the undercoat composition comprises a colorant, the content of the colorant in the composition is selected appropriately according to the color and the intended application, but is preferably 0.01 to 30 mass% relative to the mass of the entire undercoat solution.

### <Dispersant>

The undercoat composition of the present invention may comprise a dispersant. Especially, when the colorant is used, the undercoat composition preferably comprises a dispersant in order to stably disperse the colorant in the undercoat composition.

As the dispersant, a polymeric dispersant is preferable. The 'polymeric dispersant' referred to in the present invention means a dispersant having a weight-average molecular weight of 1,000 or greater.

Examples of the polymeric dispersant include polymeric dispersants such as DISPERBYK-101, DISPERBYK-102, DISPERBYK-103, DISPERBYK-106, DISPERBYK-111, DISPERBYK-161, DISPERBYK-162, DISPERBYK-163, DISPERBYK-164, DISPERBYK-166, DISPERBYK-167, DISPERBYK-168, DISPERBYK-170, DISPERBYK-171, DISPERBYK-174, and DISPERBYK-182 (manufactured by BYK Chemie), EFKA4010, EFKA4046, EFKA4080, EFKA5010, EFKA5207, EFKA5244, EFKA6745, EFKA6750, EFKA7414, EFKA745, EFKA7462, EFKA7500, EFKA7570, EFKA7575, and EFKA7580 (manufactured by EFKA Additives), Disperse Aid 6, Disperse Aid 8, Disperse Aid 15, and Disperse Aid 9100 (manufactured by San Nopco Limited); various types of SOLSPERSE dispersants such as Solsperse 3000, 5000, 9000, 12000, 13240, 13940, 17000, 22000, 24000, 26000, 28000, 32000, 36000, 39000, 41000, and 71000 (manufactured by Noveon); Adeka Pluronic L31, F38, L42, L44, L61, L64, F68, L72, P95, F77, P84, F87, P94, L101, P103, F108, L121, and P-123 (manufactured by Adeka Corporation), lonet S-20 (manufactured by Sanyo Chemical Industries, Ltd.), and Disparlon KS-860, 873SN, and 874 (polymeric dispersant), #2150 (aliphatic poly carboxylic acid), and #7004 (polyether ester type) (manufactured by Kusumoto Chemicals, Ltd.).

The content of the dispersant in the undercoat composition is appropriately selected according to the intended purpose, and is preferably 0.05 to 15 mass% relative to the mass of the entire undercoat composition.

### <Surfactant>

The undercoat composition comprises a surfactant in order to provide stable discharge properties for a long period of time.

As the surfactant, those described in JP-A-62-173463 and JP-A-62-183457 can be cited. Examples thereof include anionic surfactants such as dialkylsulfosuccinic acid salts, alkylnaphthalene sulfonic acid salts, and fatty acid salts; nonionic surfactants such as polyoxyethylene alkyl ethers, polyoxyethylene alkyl aryl ethers, acetylene glycols and polyoxyethylene/polyoxypropylene block copolymers; and cationic surfactants such as alkylamine salts and quaternary ammonium salts. A fluorine-based surfactant (e.g. an organofluoro compound) or a silicone-based surfactant (e.g. a polysiloxane compound) may be used as the above-mentioned surfactant. The organofluoro compound is preferably hydrophobic. Examples of the organofluoro compound include fluorine-based surfactants, oil-like fluorine-based compounds (e.g. fluorine oils), solid fluorine compound resins (e.g. tetrafluoroethylene resin), and those described in JP-B-57-9053 (columns 8 to 17) and JP-A-62-135826.

The polysiloxane compound is preferably a modified polysiloxane compound where an organic group is introduced into a part of a methyl group of dimethyl polysiloxane. Examples of the modification include polyether modification, methyl styrene modification, alcohol modification, alkyl modification, aralkyl modification, fatty acid ester modification, epoxy modification, amine modification, amino modification, mercapto modification, and the like, but the modification is not particularly limited to the above. The methods of modification may be used in combination. Among them, the polyether-modified polysiloxane compounds are preferable from the viewpoint of improving inkjet discharge stability.

Examples of the polyether-modified polysiloxane compound include SILWET L-7604, SILWET L-7607N, SILWET FZ-2104, SILWET FZ-2161 (manufactured by Nippon Unicar Co., Ltd.), BYK306, BYK307, BYK331, BYK333, BYK347, BYK348, and the like (manufactured by BYK Chemie Co., Ltd.), KF-351A, KF-352A, KF-353, KF-354L, KF-355A, KF-615A, KF-945, KF-640, KF-642, KF-643, KF-6020, X-22-6191, X-22-4515, KF-6011, KF-6012, KF-6015, and KF-6017 (manufactured by Shin-Etsu Chemical Co., Ltd.).

Among them, as the surfactant, a silicone-type surfactant is preferable.

The content of the surfactant in the undercoat composition or the ink composition of the present invention is appropriately adjusted according to the intended application, and is preferably 0.001 to 2 mass% relative to the entire mass of the undercoat composition or the ink composition.

### <Other components>

In the present invention, the undercoat composition may comprise as necessary, in addition to the above components, a co-sensitizer, a UV absorber, an antioxidant, an antifading agent, a conductive salt, a solvent, a polymer compound, a basic compound, etc. As these other components, known substances may be used, and examples include those described in JP-A-2009-221416.

Furthermore, it may comprise a stabilizer used for an isocyanate compound, which is described later.

Furthermore, from the viewpoint of storage properties and suppression of head clogging, the undercoat composition may comprise a polymerization inhibitor.

The polymerization inhibitor is preferably added at 200 to 20,000 ppm relative to the total amount of the undercoat composition.

Examples of the polymerization inhibitor include a nitroso-based polymerization inhibitor, a hindered amine-based polymerization inhibitor, hydroquinone, benzoquinone, p-methoxyphenol, TEMPO, TEMPOL, and Al cupferron.

### <Properties of undercoat composition>

When the undercoat layer is applied by an inkjet method using the undercoat composition of the present invention, the undercoat composition has a viscosity at 25°C of preferably no more than 40 mPa•s, more preferably 5 to 40 mPa•s, and yet more preferably 7 to 30 mPa•s. Furthermore, the viscosity of the undercoat composition at the discharge temperature (preferably 25°C to 80°C, and more preferably 25°C to 50°C) is preferably 3 to 15 mPa•s, and more preferably 3 to 13 mPa•s. With regard to the undercoat composition, it is preferable that its component ratio is appropriately adjusted so that the viscosity is in the above-mentioned range. When the viscosity at room temperature (25°C) is set to be high, even when a porous recording medium (support) is used, penetration of the ink composition into the recording medium can be prevented, and uncured monomer can be reduced.

The viscosity of the undercoat composition is measured using a model E viscometer (Toki Sangyo Co., Ltd.).

### <Preparation of undercoat composition>

With regard to a method of preparing the undercoat composition of the present invention, it may be prepared by stirring and mixing the respective components.

Here, when preparing an undercoat solution, all components to be contained in the undercoat solution may be stirred and mixed at the same time, or a solution obtained by stirring and mixing components other than the Component A and/or Component C may be stored, and Component A and/or Component C may be added thereto prior to use, thus preparing an undercoat solution.

In step a of the inkjet recording method of the present invention, it is preferable from the viewpoint of coating properties that the undercoat composition is applied to a recording medium within one day after preparation.

### (Composition set)

The composition set of the present invention is a composition set for producing the undercoat composition of the present invention, and comprises Composition 1 comprising Component A and Composition 2 comprising Component B and Component C.

Specifically, the undercoat composition of the present invention may be produced by mixing Composition 1 and Composition 2 immediately before using it as an undercoat solution.

Composition 1 comprises at least Component A and may comprise Component A and optionally a stabilizer. The stabilizer is not particularly limited, and a known stabilizer used for an isocyanate compound such as a phosphite ester, an acid amide, an organic amine, an acid chloride, etc. may be used.

Composition 2 comprises at least Components B and C, and preferably comprises all components other than Component A contained in the undercoat composition.

Furthermore, Composition 2 may be divided into Composition 2-1 comprising Component B and Composition 2-2 comprising Component C, and a composition set may comprise Composition 1, Composition 2-1, and Composition 2-2.

In this case, the undercoat composition of the present invention may be produced by mixing Composition 1, Composition 2-1, and Composition 2-2.

### (Inkjet recording method)

The inkjet recording method of the present invention comprises, in order, an application step of providing an undercoat layer by applying the undercoat composition of the present invention to a recording medium as step a, an image formation step of discharging an ink composition onto the undercoat layer as step b, and a curing step of irradiating the undercoat layer and the ink composition with actinic radiation so as to carry out curing as step c, the ink composition comprising a radically polymerizable monomer, a radical polymerization initiator, and a colorant. Furthermore, the inkjet recording method of the present invention is suitable for package printing, and is particularly suitable for food package printing.

### <step a: an application step of providing an undercoat layer by applying an undercoat composition onto a recording medium>

The inkjet recording method of the present invention comprises an application step of providing an undercoat layer by applying an undercoat composition onto a recording medium as step a.

### Recording medium

The recording medium (substrate, support, recording material, etc.) used in the inkjet recording method of the present invention is not particularly limited and a known recording medium may be used. Among them, transparent medium is preferably used for packaging printing of food packaging.

In the present invention, being 'transparent' means having a visible light transmittance of at least 80%, and preferably a visible light transmittance of at least 90%. The transparent recording medium may be colored as long as it is transparent, but is preferably a colorless recording medium.

Specific examples of the recording medium include glass, quartz, and a plastic film (e.g. cellulose diacetate, cellulose triacetate, cellulose propionate, cellulose butyrate, cellulose acetate butyrate, cellulose nitrate, an acrylic resin, a chlorinated polyolefin resin, a polyether sulfone resin, polyethylene terephthalate (PET), polyethylene naphthalate, nylon (NY), polyethylene, porystylene, polypropylene, a polycycloolefin resin, a polyimide resin, a polycarbonate resin, polyvinyl acetal. etc).

Furthermore, as the transparent recording medium, a mixture of two or more types of the above resins or one formed by layering at least two of these resins may be used.

Among them, the recording medium is preferably a recording medium having an image formation face comprising at least one type of resin selected from the group consisting of a polyolefin resin, a polyester resin, and a polyamide resin, more preferably a recording medium having an image formation face comprising at least one type of resin selected from the group consisting of polyethylene terephthalate, polyethylene, polypropylene and nylon, yet more preferably a recording medium comprising at least one type of resin selected from the group consisting of polyethylene terephthalate, polyethylene, polypropylene and nylon.

As the polyethylene, LDPE (low-density polyethylene), MDPE (meidumdensity polyethylene), or HDPE (high-density polyethylene) is preferably used; as the polypropylene, CPP (cast polypropylene), OPP (biaxially oriented polypropylene), KOP (polyvinylidene chloride-coated OPP), or AOP (PVAcoated OPP) is preferably used; as the PET, biaxially oriented polyester is preferably used; and as the nylon, ON (oriented nylon), KON (oriented nylon), or CN (cast nylon) is preferably used.

In addition, a combination of EVA (ethylene/vinyl acetate copolymerization film), PVA (Vinylone), EVOH (polyvinyl alcohol), PVC (polyvinyl chloride), PVDC (polyvinylidene chloride, Saran), Cellophane (PT, MST, and K Cello), ZX (Zekuron (polyacrylonitrile, PAN)), and PS (polystyrene and styryl) is preferably used.

According to the applications of the package, optimal materials are selected, and a film in a multilayer structure may be made so as to prepare a film having a combination of the characteristics of the respective materials.

In addition, for the purpose of improvement of the strength of the package, oxygen blocking, or the like, AL (aluminum foil), a VM film (aluminumdeposited film, a transparent deposited film), or the like can also be incorporated in the multiplayer surface.

In addition, recently, a co-extruded film formed by extruding the resins together from two or more parallel slits and performing film formation and lamination at once is also preferably used. Lamination can be carried out to make at most 5 to 7 layers even a thin layer in several µm that cannot be used to make a film form, and therefore, films that can be used in various performance and applications are made.

Furthermore, preferred examples of the recording medium include a hydrophilic recording medium, and more preferred examples include a corona-treated recording medium. Due to the corona treatment, a hydrophilic group such as a hydroxy group is formed on the recording medium surface. When the recording medium surface is hydrophilic, the effect of the present invention can be further exhibited.

The thickness of the recording medium is not particularly limited, but is preferably 1 to 500 µm, more preferably 2 to 200 µm, yet more preferably 5 to 100 µm, and particularly preferably 10 to 90 µm.

### Application method

In the inkjet recording method of the present invention, as means for applying the undercoat composition of the present invention on the recording medium, a coating machine, an inkjet nozzle, etc. may be used, and a coating machine is preferably used.

The coating machine is not particularly limited and may be appropriately selected from known coating machines according to the intended purpose, etc., and examples thereof include an air doctor coater, a blade coater, a rod coater, a knife coater, a squeegee coater, an immersion coater, a reverse roll coater, a transfer roll coater, a gravure coater, a kiss roll coater, a cast coater, a spray coater, a curtain coater, and an extrusion coater. Details may be referred to in 'Kotingu Kogaku (Coating Engineering)' by Yuji Harasaki.

Among them, in terms of equipment cost, application of the undercoat composition on the recording medium is preferably carried out by coating using a relatively inexpensive bar coater or spin coater.

The undercoat composition is preferably applied to the same region as the image formed on the recording medium by means of the ink composition in Step b or to a wider region than that of the image, and is preferably applied so as to cover the entire face of a region on which an image can be formed.

The amount of the undercoat composition applied (mass per unit area) is preferably at least 0.05 g/m² but no greater than 5 g/m², and more preferably at least 0.06 g/m² but no greater than 3 g/m². It is preferable for the amount of the undercoat composition applied to be in the above-mentioned range since a printed material having sufficient improving effect of adhesion and excellent flexibility is obtained.

Furthermore, with regard to the amount of the undercoat composition applied (ratio by mass per unit area), it is preferably at least 0.05 but no greater than 5 when the maximum amount of the ink composition applied (per color) is 1, is more preferably at least 0.07 but no greater than 4, and is yet more preferably at least 0.1 but no greater than 3.

### <Step a': semi-curing step of irradiating applied undercoat composition with actinic radiation to thus carry out semi-curing>

The inkjet recording method of the present invention preferably comprises, as step a' between step a and step b, a semi-curing step of irradiating the undercoat composition with actinic radiation to thus carry out semi-curing.

Due to it comprising the semi-curing step, even when an undercoat composition having a low content of the isocyanate compound is used, an image having high adhesion can be formed.

In the present invention, 'semi-curing' means a partial cure (partially cured; partial curing) and denotes a state in which an undercoat composition and/or an ink composition (hereinafter, also simply called an 'ink'), which is described later, applied to a recording medium is partially cured or is not completely cured. When an undercoat composition or an ink composition discharged onto an undercoat composition is semi-cured, the degree of curing may be non-uniform. For example, it is preferable that curing of an undercoat composition and/or an ink composition progresses in the depth direction.

Examples of methods for semi-curing the undercoat composition include a method in which actinic radiation is applied to the undercoat composition, that is, a method of causing a curing reaction by an exposure.

As the actinic radiation, α rays, γ rays, an electron beam, X rays, visible light, infrared light, etc. may be used other than ultraviolet rays. Among them, ultraviolet rays or visible light are preferable, and ultraviolet rays are more preferable.

The amount of energy necessary for semi-curing the undercoat composition depends on the type and content of Component C, but it is preferably on the order of 1 to 500 mJ/cm² when energy is provided by actinic radiation.

### Exposure source

As an exposure source, a mercury lamp, a gas/solid laser, etc. are mainly used, and for UV photocuring inkjet ink a mercury lamp and a metal halide lamp are widely known. However, from the viewpoint of protection of the environment, there has recently been a strong desire for mercury not to be used, and replacement by a GaN semiconductor UV light emitting device is very useful from industrial and environmental viewpoints. Furthermore, LEDs (UV-LED) and LDs (UV-LD) have small dimensions, long life, high efficiency, and low cost, and their use as a photocuring inkjet light source can be expected.

Furthermore, light-emitting diodes (LED) and laser diodes (LD) may be used as the source of actinic radiation. In particular, when a UV ray source is needed, a UV-LED or a UV-LD may be used. For example, Nichia Corporation has marketed a violet LED having a wavelength of the main emission spectrum of between 365 nm and 420 nm. Furthermore, when a shorter wavelength is needed, the example of the LED includes a LED, disclosed in US Pat. No. 6,084,250, that can emit actinic radiation whose wavelength is centered between 300 nm and 370 nm. Furthermore, another violet LED is available, and irradiation can be carried out with radiation of a different UV bandwidth. The actinic radiation source preferable in the present invention is a UV-LED, and a UV-LED having a peak wavelength at 340 to 400 nm is particularly preferable.

The maximum illumination intensity (irradiance) of the LED on a recording medium is preferably 10 to 2,000 mW/cm², more preferably 20 to 1,000 mW/cm², and particularly preferably 50 to 800 mW/cm².

Examples of exposure means suitable for semi-curing an undercoat layer include a metal halide lamp, a mercury lamp, and an LED light source. Among others, an LED light source is preferable. The inkjet recording method of the present invention is suitable for flexible packaging, and it is preferable to use a recording medium having a relatively small film thickness for flexible packaging as described above. In this case, it is preferable to use a UV-LED light source since thermal deformation and shrinkage of the recording medium are suppressed.

In the present invention, when a radically photopolymerizable undercoat composition is used in the presence of oxygen, which inhibits radical polymerization, thus carrying out partial photocuring, curing of the undercoat composition advances further in the interior than in the exterior.

In particular, the polymerization reaction is easily inhibited on the surface of the undercoat composition compared with the interior thereof due to the influence of oxygen in the air. It is therefore possible to semi-cure the undercoat composition by controlling the conditions under which actinic radiation is applied.

Due to the actinic radiation, generation of an active species as a result of decomposition of a radical polymerization initiator is promoted, and as a result of an increase in the active species or an increase in temperature a curing reaction by polymerization or crosslinking, by means of the active species, of a polymerizable or crosslinking material is promoted.

Furthermore, increasing the viscosity (viscosity increase) is also suitably carried out by irradiation with actinic light.

In the semi-curing step, when a curing reaction is based on an ethylenically unsaturated compound, the degree of unpolymerization may, as described later, be measured quantitatively by the reaction ratio of an ethylenically unsaturated group.

When a semi-cured state of the undercoat composition is realized by a polymerization reaction of a ethylenically unsaturated compound for which polymerization is initiated by irradiation with actinic radiation, from the viewpoint of improvement of scratch resistance of a printed material, it is preferable for the degree of unpolymerization (A (after polymerization)/A (before polymerization)) to be at least 0.2 but no greater than 0.9, more preferably at least 0.3 but no greater than 0.9, and particularly preferably at least 0.5 but no greater than 0.9.

Here, A (after polymerization) is an infrared absorption peak due to a ethylenically unsaturated group after the polymerization reaction, and A (before polymerization) is an infrared absorption peak due to the ethylenically unsaturated group before the polymerization reaction. For example, when the ethylenically unsaturated compound contained in the undercoat layer is an acrylate monomer or a methacrylate monomer, an absorption peak due to the polymerizable group (acrylate group, methacrylate group) is observed at around 810 cm-1, and the degree of unpolymerization is preferably defined by the absorbance of the peak.

Moreover, as means for measuring an infrared absorption spectrum, a commercial infrared spectrophotometer may be used; either a transmission type or a reflectance type may be used, and it is preferably selected as appropriate depending on the form of a sample. For example, an FTS-6000 infrared spectrophotometer manufactured by Bio-Rad Laboratories, Inc. may be used for measurement.

### <Step b: image formation step of forming image by discharging ink composition onto undercoat layer>

The inkjet recording method of the present invention comprises as step b an image formation step of forming an image by discharging an ink composition onto the undercoat layer.

Due to the ink composition being discharged onto the undercoat composition, an image having good adhesion can be obtained.

As means for applying an ink composition, an inkjet head is preferably used. Preferred examples of the inkjet head include heads employing a charge control system in which an ink is discharged by utilizing an electrostatic attraction force, a drop-on-demand system (pressure pulse system) in which oscillatory pressure of a piezo element is utilized, an acoustic inkjet system in which an electrical signal is changed into an acoustic beam and applied to an ink, and the ink is discharged by utilizing radiation pressure, a thermal inkjet (Bubblejet (registered trademark)) in which a bubble is formed by heating an ink and the pressure thus generated is utilized, etc.

In the image formation step, the ink composition discharges by an inkjet recording method onto the undercoat composition.

An inkjet recording device used in the inkjet recording method of the present invention is not particularly limited, and any known inkjet recording device that can achieve an intended resolution may be used. That is, any known inkjet recording device, such as a commercial product, may be used in order to discharge an ink composition onto a recording medium in the image formation step of the inkjet recording method of the present invention.

The inkjet recording device that can be used in the present invention is equipped with, for example, an ink supply system, a temperature sensor, and an actinic radiation source.

The ink supply comprises, for example, a main tank containing the ink composition of the present invention, a supply pipe, an ink composition supply tank immediately before an inkjet head, a filter, and a piezo system inkjet head. The piezo system inkjet head may be driven so as to discharge a multisize dot of preferably 1 to 100 pL, more preferably 3 to 42 pL, and yet more preferably 8 to 30 pL, at a resolution of preferably 320 x 320 to 4,000 x 4,000dpi, more preferably 400 x 400 to 1,600 x 1,600dpi, and yet more preferably 720 x 720 dpi. Here, dpi referred to in the present invention means the number of dots per 2.54 cm.

Since it is desirable for the ink composition of the present invention to be discharged at a constant temperature, the inkjet recording equipment is preferably equipped with a temperature stabilizer for stabilizing the temperature of the inks. Parts to be controlled to a constant temperature include all of the supply pipe system and the members from the ink tank (including an intermediate tank if it is provided) to the discharging face of the nozzle. A section from the ink supply tank to the inkjet head is thermally insulated and heated.

A method of controlling temperature is not particularly limited, but it is preferable to provide, for example, temperature sensors at a plurality of pipe section positions, and control heating according to the ink composition flow rate and the temperature of the surroundings. The temperature sensors may be provided on the ink composition supply tank and in the vicinity of the inkjet head nozzle. Furthermore, the head unit that is to be heated is preferably thermally shielded or insulated so that the device main body is not influenced by the temperature of the outside air. In order to reduce the printer start-up time required for heating, or in order to reduce the thermal energy loss, it is preferable to thermally insulate the head unit from other sections and also to reduce the heat capacity of the entire heated unit.

It is preferably to maintain the ink composition discharge temperature as constant as possible. In the present invention, the control range for the temperature of ink composition is preferably ±5°C of a set temperature, more preferably ±2°C of the set temperature, and yet more preferably ±1°C of the set temperature.

The droplet firing interval until a droplet of an ink composition is fired after applying an undercoat composition is preferably at least 5 µsec but no greater than 10 sec. The droplet firing interval of ink composition droplets is more preferably at least 10 µsec but no greater than 5 sec, and particularly preferably at least 20 µsec but no greater than 5 sec.

The inkjet recording method of the present invention may comprise a step of semi-curing the discharged ink composition after carrying out image formation by discharging the ink composition onto the undercoat composition of the present invention, but when the curing step is carried out immediately thereafter, it is preferable for it not to comprise this semi-curing step.

Furthermore, in the inkjet recording method of the present invention, one type of the ink composition may be used on its own or two or more types thereof may be used.

For example, when a color image is formed, it is preferable to use at least yellow, cyan, magenta, and black ink compositions, and it is more preferable to use white, yellow, cyan, magenta, and black ink compositions.

Furthermore, a light color ink composition such as light magenta or light cyan, a special color ink composition such as orange, green, or violet, a clear ink composition, a metallic ink composition, etc. may be used.

In the inkjet recording method of the present invention, when two or more types of ink compositions are discharged, it is preferable for it to comprise a step of semi-curing the discharged ink composition after discharging one type of ink composition but before discharging another type of ink composition. That is, the inkjet recording method of the present invention preferably comprises, for each of the ink compositions used, a step of discharging an ink composition onto the undercoat layer and a step of semi-curing the discharged ink composition. When in this mode, the effects of the present invention can be further exhibited.

Furthermore, when two or more types of ink compositions are discharged, the semi-curing step is carried out by irradiation with actinic radiation, and in a preferred embodiment thereof the exposure conditions and the exposure equipment in step a' above are used, preferred embodiments also being the same.

Furthermore, when the curing step is carried out immediately thereafter, the inkjet recording method of the present invention may comprise a step of semi-curing the last-discharged ink composition or may not comprise it, but from the viewpoint of cost and simplicity, it is preferable for it not to comprise it.

Moreover, when two or more types of ink compositions are discharged, it is preferable to discharge any of the ink compositions onto the semi-cured undercoat composition, onto the discharged ink composition, or onto the semi-cured ink composition. That is, it is preferable to discharge any of the ink compositions onto the undercoat composition directly or via another ink composition layer. Furthermore, from the viewpoint of adhesion, it is preferable that the undercoat composition is semi-cured.

The inkjet recording method of the present invention may suitably employ the ink set comprising at least one ink composition of the present invention. The order in which colored ink compositions are discharged is not particularly limited, but it is preferable to apply to a recording medium from a colored ink composition having a low lightness; when the ink compositions of yellow, cyan, magenta, and black are used, they are preferably applied on top of the recording medium in the order black → magenta → cyan → yellow. Furthermore, when white is additionally used, they are preferably applied on top of the recording medium in the order black → magenta → cyan → yellow → white. Moreover, the present invention is not limited thereto, and an ink set comprising a total of seven colors, that is, light cyan, light magenta ink compositions and cyan, magenta, black, white, and yellow dark ink compositions may preferably be used, and in this case they are applied on top of the recording medium in the order black → magenta → cyan → yellow → light magenta → light cyan → white.

### <step c: a curing step of irradiating the undercoat layer and the ink composition with actinic radiation so as to carry out curing>

The inkjet recording method in this invention comprises a curing step of irradiating the undercoat layer and the ink composition with actinic radiation so as to carry out curing. After carrying out this step, undercoat layer and ink compositions are completely cured. Being 'completely cured' in the present invention means a state in which the interior and surface of the undercoat composition and the ink composition on the recording medium are completely cured. Specifically, it can be evaluated by pressing plain paper (e.g. copier paper C2, product code V436, Fuji Xerox Co., Ltd.) with a uniform force (a constant value in the range of 500 to 1,000 mN/cm²) after the overall curing step is completed, and examining transfer of the liquid surface to the plain paper. That is, when there is no transfer at all, it is defined as being in a completely cured state.

The curing step is carried out by irradiation with actinic radiation, and in a preferred embodiment thereof the exposure conditions and the exposure equipment in step a' above are used, preferred embodiments also being the same. That is, the curing step is preferably carried out under an oxygen-deficient atmosphere.

### <Step d: lamination step of forming second adhesive layer and laminate film (a film for lamination) above ink composition layer>

It is also preferable for the inkjet recording method of the present invention to further comprise a lamination step of forming an adhesive layer and a laminate film above an ink composition layer, as step d subsequent to step c.

Lamination enables leaching of an ink component from a printed material as well as blocking and odor to be suppressed, and it enables the use preferably for food packaging in particular.

The adhesive layer is not particularly limited and can be formed by applying a known adhesive by a known method.

As the laminate film, a resin film is used, and examples include a polyethylene terephthalate film, a polypropylene film, a nylon film, a polyvinyl chloride film, a polyethylene film, and a triacetylcellulose film. These films may be subjected to biaxial stretching.

In this step, a laminate film may be bonded after an adhesive layer is formed on an ink composition or an adhesive layer may first be applied to a laminate film followed by bonding onto an ink composition.

A method of lamination is not particularly limited; a known method may be used, and dry lamination can be cited as an example.

When a resin film is used as a substrate, although it depends on the lamination method chosen, it is preferable to use a resin film that has high adhesion to a resin film used on the face of the substrate that is to be laminated.

### (Ink composition)

An ink composition used in the inkjet recording method of the present invention comprises a radically polymerizable monomer, a radical polymerization initiator, and a colorant.

The total content of the radically polymerizable monomer in the ink composition is preferably 70 to 98 mass% of the entire composition from the viewpoint of curability, more preferably 70 to 95 mass%, and yet more preferably 80 to 93 mass%.

The content of a polyfunctional ethylenically unsaturated compound in the ink composition is preferably at least 70 mass% relative to the total content of the radically polymerizable monomer, more preferably 70 to 100 mass%, and yet more preferably 80 to 100 mass%.

Other than the above, the radically polymerizable monomer and the polyfunctional ethylenically unsaturated compound have the same meanings as those of the radically polymerizable monomer and the polyfunctional ethylenically unsaturated compound in the undercoat composition, and preferred embodiments are also the same. The polyfunctional ethylenically unsaturated compound (more preferably a polyfunctional ethylenically unsaturated monomer) preferably comprises a polyalkylene glycol diacrylate. The polyalkylene glycol diacrylate is preferably polyethylene glycol diacrylate or polypropylene glycol diacrylate.

The number of repeating alkylene glycol units in the polyalkylene glycol diacrylate, that is, the number of repeating alkyleneoxy groups, is at least 2, preferably 2 to 100, and more preferably 2 to 20.

Furthermore, in the present invention, the ink composition is a radiationcurable ink composition and is different from an aqueous ink composition or a solvent ink composition. The ink composition preferably contains as little water or volatile solvent as possible, and even when it is contained, it is preferably no greater than 1 mass% relative to the total mass of the ink composition, more preferably no greater than 0.5 mass%, and yet more preferably no greater than 0.1 mass%.

### <Colorant>

The ink composition that can be used in the present invention comprises a colorant in order to improve the visibility of a formed image area.

The colorant is not particularly limited, but a pigment and an oil-soluble dye that have excellent weather resistance and rich color reproduction are preferable, and it may be selected from any known coloring agent such as a soluble dye. It is preferable that the colorant does not function as a polymerization inhibitor in a polymerization reaction, which is a curing reaction. This is because the sensitivity of the curing reaction by actinic radiation should not be degraded.

The pigment that can be used in the present invention is not particularly limited and, for example, organic and inorganic pigments having the numbers below described in the Color Index may be used.

That is, as a red or magenta pigment, Pigment Red 3, 5, 19, 22, 31, 38, 42, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, or 257, Pigment Violet 3, 19, 23, 29, 30, 37, 50, or 88, and Pigment Orange 13, 16, 20, or 36; as a blue or cyan pigment, Pigment Blue 1, 15, 15:1, 15:2, 15:3, 15:4, 15:6, 16, 17-1, 22, 27, 28, 29, 36, or 60; as a green pigment, Pigment Green 7, 26, 36, or 50; as a yellow pigment, Pigment Yellow 1, 3, 12, 13, 14, 17, 34, 35, 37, 55, 74, 81, 83, 93, 94, 95, 97, 108, 109, 110, 120, 137, 138, 139, 153, 154, 155, 157, 166, 167, 168, 180, 185, or 193; as a black pigment, Pigment Black 7, 28, or 26; as a white pigment, Pigment White 6, 18, or 21, etc. may be used according to the intended application.

In the present invention, a disperse dye may be used in a range that enables it to be dissolved in a water-immiscible organic solvent. Disperse dyes generally include water-soluble dyes, but in the present invention it is preferable for the disperse dye to be used in a range such that it dissolves in a water-immiscible organic solvent.

Specific preferred examples of the disperse dye include CI Disperse Yellow 5, 42, 54, 64, 79, 82, 83, 93, 99, 100, 119, 122, 124, 126, 160, 184:1, 186, 198, 199, 201, 204, 224, and 237; CI Disperse Orange 13, 29, 31:1, 33, 49, 54, 55, 66, 73, 118, 119, and 163; CI Disperse Red 54, 60, 72, 73, 86, 88, 91, 92, 93, 111, 126, 127, 134, 135, 143, 145, 152, 153, 154, 159, 164, 167:1, 177, 181, 204, 206, 207, 221, 239, 240, 258, 277, 278, 283, 311, 323, 343, 348, 356, and 362; CI Disperse Violet 33; CI Disperse Blue 56, 60, 73, 87, 113, 128, 143, 148, 154, 158, 165, 165:1, 165:2, 176, 183, 185, 197, 198, 201, 214, 224, 225, 257, 266, 267, 287, 354, 358, 365, and 368; and CI Disperse Green 6:1 and 9.

It is preferable that the colorant is added to the ink composition and then dispersed in the ink to an appropriate degree. For dispersion of the colorant, for example, a dispersing machine such as a ball mill, a sand mill, an attritor, a roll mill, an agitator, a Henschel mixer, a colloidal mill, an ultrasonic homogenizer, a pearl mill, a wet type jet mill, or a paint shaker may be used.

The colorant may be added directly to the ink composition, but in order to improve dispersibility it may be added in advance to a solvent or a dispersing medium such as a polymerizable compound used in the present invention.

In the present invention, in order to avoid the problem of the solvent resistance being degraded when the solvent remains in the cured image and the VOC (Volatile Organic Compound) problem of the residual solvent, it is preferable to add the colorant in advance to a dispersing medium such as a polymerizable compound. As a polymerizable compound used, it is preferable in terms of dispersion suitability to select a monomer having low viscosity. The colorants may be used by appropriately selecting one type or two or more types according to the intended purpose of the ink composition.

When a colorant such as a pigment that is present as a solid in the ink composition is used, it is preferable for the colorant, the dispersant, the dispersing medium, dispersion conditions, and filtration conditions to be set so that the average particle size of colorant particles is preferably 0.005 to 0.5 µm, more preferably 0.01 to 0.45 µm, and yet more preferably 0.015 to 0.4 µm. By such control of particle size, clogging of a head nozzle can be suppressed, and the ink storage stability, the transparency, and the curing sensitivity can be maintained.

The content of the colorant in the ink composition is appropriately selected according to the color and the intended purpose, and is preferably 0.01 to 30 mass% relative to the mass of the entire ink composition.

The content of the colorant in the undercoat composition is appropriately selected according to the color and the intended purpose, and is preferably 0.01 to 30 mass% relative to the mass of the entire undercoat composition.

### <Other components>

The ink composition that can be used in the present invention may comprise a dispersant, a surfactant and other components.

The dispersant, the surfactant and the other components in the ink composition has the same meaning as that of the dispersant, the surfactant and the other components in the undercoat composition above, and preferred embodiments are also the same.

### <Properties of ink composition>

While taking into consideration dischargeability, the ink composition of the present invention has a viscosity at 25°C of preferably no more than 40 mPa•s, more preferably 5 to 40 mPa•s, and yet more preferably 7 to 30 mPa•s. Furthermore, the viscosity of the ink composition at the discharge temperature (preferably 25°C to 80°C, and more preferably 25°C to 50°C) is preferably 3 to 15 mPa•s, and more preferably 3 to 13 mPa•s. With regard to the ink composition of the present invention, it is preferable that its component ratio is appropriately adjusted so that the viscosity is in the above-mentioned range. When the viscosity at room temperature (25°C) is set to be high, even when a porous recording medium (support) is used, penetration of the ink composition into the recording medium can be prevented, and uncured monomer can be reduced. Furthermore, ink spreading when droplets of ink composition have landed can be suppressed, and as a result there is the advantage that the image quality is improved.

The surface tension of the ink composition of the present invention at 25°C is preferably 20 to 40 mN/m, more preferably 20.5 to 35.0 mN/m, yet more preferably 21 to 30.0 mN/m, and particularly preferable 21.5 to 28.0 mN/m. When in the above range, a printed material having excellent blocking resistance is obtained.

### (Printed material)

The printed material of the present invention is preferably a printed material obtained by the inkjet recording method of the present invention.

Furthermore, the printed material of the present invention preferably further comprises, in order above a printed material obtained by the inkjet recording method of the present invention, an adhesive layer and a laminate film.

The adhesive layer and the laminate film have the same meanings as those of the adhesive layer and the laminate film explained for the lamination step, and preferred embodiments are also the same.

### (Inkjet recording equipment)

Inkjet recording equipment that can be used particularly suitably in the present invention is now explained in further detail. The inkjet recording method of the present invention is suitably carried out by the inkjet recording equipment, which is explained below.

The inkjet recording equipment used in the present invention preferably comprises transport means for transporting a recording medium, application means for applying an undercoat composition onto the recording medium, discharge means for discharging via inkjet an ink composition onto the undercoat composition, and complete curing means for curing the entire undercoat solution and ink composition, and may further comprise semi-curing means for semi-curing the applied undercoat composition.

Furthermore, the inkjet recording equipment used in the present invention is preferably the so-called single-pass inkjet recording equipment.

FIG. 1 is a schematic drawing showing one example of the inkjet recording equipment preferably used in the present invention. The equipment below has an exposure light source 17 for semi-curing an undercoat composition, but equipment that does not have such a semi-curing light source may also be used suitably in the present invention.

A recording medium 12, which is tensioned by an outfeed roller 24 and a wind-up roller 26 as transport means for the recording medium 12, is transported in the direction of arrow A, and an undercoat composition is applied thereonto by an undercoat composition coating roller 14. Subsequently, the undercoat composition is semi-cured by the exposure light source 17 for semi-curing an undercoat composition. Subsequently, ink compositions of each color (K: black, Y: yellow, M: magenta, C: cyan, W: white) are discharged by respective inkjet heads 18K, 18C, 18M, 18Y, and 18W for discharging ink compositions of each color, and the discharged black, yellow, magenta, and cyan ink compositions are semi-cured by semi-curing exposure light sources 20K, 20C, 20M, and 20Y disposed immediately after the inkjet heads 18K, 18C, 18M, and 18Y. Finally, the semi-cured undercoat composition and ink composition are cured overall by exposing the recording medium using nitrogen-purged exposure light source unit 22 under an oxygen-deficient atmosphere.

The nitrogen-purged exposure light source unit 22 is preferably of a mode in which, for example, an LED light source is surrounded by an inert gas blanket and is connected to an inert gas generator via an inert gas pipe, and when the inert gas generator is started the air within the blanket is replaced by the inert gas. The inert gas may employ nitrogen, etc. as already mentioned.

In FIG. 1, in order to improve the transport accuracy, a nip roll 28 is provided. Since the undercoat composition is completely cured, use of a nip roll becomes possible in the inkjet recording method of the present invention, more accurate transport is realized, and misregistration (displacement of landing position) is suppressed. The nip roll 28 is not essential, and image formation equipment having no nip roll may be used.

### Examples

The present invention is explained below more specifically by way of Examples and Comparative Examples. However, the present invention should not be construed as being limited by these Examples.

'Parts' below means 'parts by mass' unless otherwise specified.

### (Examples)

The materials used in the present invention are as follows.

### <Colorants>

IRGALITE BLUE GLVO (cyan pigment, BASF Japan)
CINQUASIA MAGENTA RT-355-D (magenta pigment, BASF Japan) NOVOPERM YELLOW H2G (yellow pigment, Clariant)
SPECIAL BLACK 250 (black pigment, BASF Japan)
Tipaque CR60-2 (white pigment, Ishihara Sangyo Kaisha Ltd.)

### <Dispersant>

SOLSPERSE 32000 (Noveon dispersant)

### <Component A: isocyanate compounds>

TM-550 (NCO type urethane ester resin, Toyo-Morton, Ltd.)
XC233-2 (terminal NCO type polyether urethane resin, Dainichiseika Color & Chemicals Mfg. Co., Ltd.)
Takenate D103H (adduct of tolylene diisocyanate and trimethylolpropane, Mitsui Chemicals Polyurethanes, Inc.)
Takenate D204 (isocyanurate of tolylene diisocyanate, Mitsui Chemicals Polyurethanes, Inc.)
Takenate D160N (adduct of hexamethylene diisocyanate and trimethylolpropane, Mitsui Chemicals Polyurethanes, Inc.)
Takenate D165N (biuret of hexamethylene diisocyanate, Mitsui Chemicals Polyurethanes, Inc.)
Takenate D170N (isocyanurate of hexamethylene diisocyanate, Mitsui Chemicals Polyurethanes, Inc.)
Takenate D178NL (allophanate of hexamethylene diisocyanate, Mitsui Chemicals Polyurethanes, Inc.)
Takenate D110NL (adduct of xylylene diisocyanate and trimethylolpropane, Mitsui Chemicals Polyurethanes, Inc.)

### <Component B: radically polymerizable monomers>

### {b1}

SR606: reactive polyester diacrylate (Log P value: -0.21) (Sartomer)
SR344: polyethylene glycol (400) diacrylate (Log P value: 0.36) (Sartomer)
SR272: triethylene glycol diacrylate (Log P value: 0.72) (Sartomer)
SR230: diethylene glycol diacrylate (Log P value: 0.88) (Sartomer)
SR444: pentaerythritol triacrylate (Log P value: 1.04) (Sartomer)
SR508: dipropylene glycol diacrylate (Log P value: 1.52) (Sartomer)
SR306: tripropylene glycol diacrylate (Log P value: 1.69) (Sartomer)
SR399: dipentaerythritol pentaacrylate (Log P value: 1.81) (Sartomer)
TPGDA: tri(1,2-propylene glycol) diacrylate (Log P value: 1.84) (Sartomer)
SR295: pentaerythritol tetraacrylate (Log P value: 1.96) (Sartomer)

### {b2}

SR454: ethoxylated (3) trimethylolpropane triacrylate (Log P value: 2.05) (Sartomer)
ADP600: hepta(1,2-propylene glycol) diacrylate (Log P value: 2.33) (Sartomer)
SR341: 3-methyl-1,5-pentanediol diacrylate (Log P value: 2.34) (Sartomer)
SR238: 1,6-hexanediol diacrylate (Log P value: 2.43) (Sartomer)
TMPTA: trimethylolpropane triacrylate (Log P value: 2.52) (Sartomer)
A-DPH: dipentaerythritol hexaacrylate (Log P value: 2.72) (Shin-Nakamura Chemical Co., Ltd.)
SR9003: propoxylated (2) neopentyl glycol diacrylate (Log P value: 2.58) (Sartomer)
NDA: 1,9-nonanediol diacrylate (Log P value: 3.68) (Shin-Nakamura Chemical Co., Ltd.)
M-403: mixture of pentaacrylate and hexaacrylate of dipentaerythritol (pentaacrylate 50% to 60%) (Toagosei Co., Ltd.)

### {b3}

NVC: *N*-vinylcaprolactam (Log P value: 1.08) (BASF)
4-HBA: 4-hydroxybutyl acrylate (Log P value: 0.68) (Tokyo Chemical Industry Co., Ltd.)
SR531: cyclic trimethylolpropane formal acrylate (Log P value: 1.45) (Sartomer)

### <Component C: photopolymerization initiators>

Irg 819: IRGACURE 819 (bis(2,4,6-trimethylbenzoyl)phenylphosphine oxide, BASF)
Irg 369: IRGACURE 369 (2-benzyl-2-dimethylamino-1-(4-morpholinophenyl)-butanone-1, BASF)
SPEEDCURE 7010 (1,3-di({α-[1-chloro-9-oxo-9H-thioxanthen-4-yl]oxy}acetylpoly[oxy(1-methylethylene)])oxy-2,2-bis({α-[1-chloro-9-oxo-9H-thioxanthen-4-yl]oxy}acetylpoly[oxy(1-methylethylene)])oxymethylpropane, CAS No. 1003567-83-6, Lambson)

### <Component D: binder polymers>

BR113: DIANAL BR113 (acrylic resin, Mitsubishi Rayon Co., Ltd.)
LTH: TEGO AddBond LTH (special polyester resin, Evonik)

### <Component E: polymerizable oligomer>

CN9006NS: urethane acrylate oligomer (hexafunctional, Sartomer)
CN2003: epoxy acrylate oligomer (difunctional, Sartomer)

### <Polyol compounds>

CAT-RT-37-2K (Toyo-Morton, Ltd.)
XA126-1 (Dainichiseika Color & Chemicals Mfg. Co., Ltd.)

### <Polymerization inhibitor>

UV-22 (Irgastab (registered trademark) UV-22, Poly[oxy(methyl-1,2-ethanediyl)], α,α',α"-1,2,3-propanetriyltris[ω-[(1-oxo-2-propen-1-yl)oxy]-, 2,6-bis(1,1-dimethylethyl)-4-(phenylenemethylene)cyclohexa-2,5-dien-1-one, BASF)

### <Surfactant>

BYK-307 (silicone-based surfactant (polyether-modified polydimethylsiloxane), BYK Chemie)

### (Preparation of mill bases)

### <Preparation of cyan mill base A>

300 parts by mass of IRGALITE BLUE GLVO, 620 parts by mass of SR9003, and 80 parts by mass of SOLSPERSE 32000 were mixed by stirring, thus giving cyan mill base A. Preparation of cyan mill base A was carried out by dispersing using a Motor Mill M50 disperser (Eiger Machinery, Inc.) with zirconia beads having a diameter of 0.65 mm at a peripheral speed of 9 m/s for 4 hours.

### <Preparation of magenta mill base B, yellow mill base C, black mill base D, and white mill base E>

Magenta mill base B, yellow mill base C, black mill base D, and white mill base E were prepared in the same manner as for cyan mill base A using the formulations and dispersion conditions shown in Table 1.

**(Table 1)**

| Mill base | | Cyan mill base A | Magenta mill base B | Yellow mill base C | Black mill base D | White mill base E |
|---|---|---|---|---|---|---|
| Formulation (parts) | IRGALITE BLUE GLVO | 300 | - | - | - | - |
| | CINQUASIA MAGENTA RT-355-D | - | 300 | - | - | - |
| | NOVOPERM YELLOW H2G | - | - | 300 | - | - |
| | SPECIAL BLACK 250 | - | - | - | 400 | - |
| | Tipaque CR60-2 | - | - | - | - | 500 |
| | SR9003 | 620 | 600 | 600 | 520 | 440 |
| | SOLSPERSE 32000 | 80 | 100 | 100 | 80 | 60 |
| Dispersion conditions | Peripheral speed (m/s) | 9 | 9 | 9 | 9 | 9 |
| | Time (hours) | 4 | 10 | 10 | 7 | 4 |

### <Preparation of undercoat composition and ink composition>

Materials were stirred and mixed using a mixer (Silverson L4R) at room temperature (25°C) and 5,000 rpm for 20 minutes at the ratios shown in Table 2 to Table 8, thus preparing the undercoat compositions and ink compositions used in Examples 1 to 58 and Comparative Examples 1 to 13. The units of the contents of the components in Table 2 to Table 8 are parts by mass. Moreover, the notation '-' in the table means that the component is not present.

### <Image formation method>

As shown in FIG. 1, a roller applicator (amount of undercoat solution applied; 2 µm) was disposed in the most upstream section of a roll transport system, and on the downstream thereof were disposed an LED light source, a head for black, an LED light source, a head for cyan, an LED light source, a head for magenta, an LED light source, a head for yellow, an LED light source, a head for white, and a nitrogen-purged LED exposure unit. The ink compositions used were ink compositions Nos.1 to 5 of the respective colors shown in Table 8.

As inkjet heads four CA3 heads manufactured by Toshiba Tec Corporation were arranged side by side for each color, the heads were heated to 45°C, and the frequency was controlled so that drawing could be carried out with a fired droplet size of 42 pL. As the LED light source, an LED light source unit having a peak wavelength at 385 nm (LEDZero Solidcure, Integration Technolohy) was used. With regard to nitrogen purging, as an inert gas source a Maxi-Flow30 N₂ gas generating device (Inhouse Gas) equipped with a compressor was connected at a pressure of 0.2 MPa·s, and the nitrogen concentration was set by making nitrogen flow at a flow rate of 2 to 10 L/min so that the nitrogen concentration within the blanket was 99% and the oxygen concentration was 1%. As recording medium, the various recording media described below were used. Scanning was carried out at a speed of 30 m/min, and the recording medium coated with undercoat solution was semi-cured using the LED light source (exposure intensity for semi-curing 40 W/cm²). The ink compositions were discharged thereonto, and the ink compositions were semi-cured using the LED light sources (exposure intensity for semi-curing 40 W/cm²), thus drawing a 100% solid image. Subsequently, the image was completely cured by means of the LED light source. The various aspects of performance shown below were tested.

The light intensity of the LED light sources prior to the nitrogen-purged exposure was adjusted so that the undercoat composition and the ink composition could be maintained in the semi-cured state.

Being 'completely cured' in the present invention means a state in which the interior and surface of the undercoat solution and ink composition on the recording medium are completely cured. Specifically, it can be evaluated by pressing plain paper (e.g. copier paper C2, product code V436, Fuji Xerox Co., Ltd.) with a uniform force (a constant value in the range of 500 to 1,000 mN/cm²), and examining liquid surface transfer to the plain paper. That is, when there is no transfer at all, it is defined as being in a completely cured state.

### (Evaluation)

### <Method for evaluation of coating properties>

Coating properties when a substrate was subjected to flexographic coating with the undercoat composition were evaluated by the procedure below.

Two types, that is, corona treatment-free NY (Unitika Ltd.) and PET (Futamura Chemical Co., Ltd.) substrates were prepared as well as an NY substrate and a PET substrate that were subjected to corona treatment by the method below.

Corona treatment was carried out by discharging a corona toward a substrate using a 'wide-base treatment station' manufactured by Kasuga Electric Works Ltd. at a power of 8 kW. An anilox roller was prepared that could coat these substrates with the undercoat composition at a thickness of 2 µm, an image was formed by scanning at a print speed of 30 m/min and carrying out semi-curing, and a check was carried out for the presence of cissing. With regard to cissing, a VK9500 violet laser microscope (Keyence Corporation) was used, the image was checked with a x10 objective lens, and when there was part where the substrate was not wetted (coated) with the undercoat composition, there was considered to be cissing.

Evaluation was carried out using the five levels below, and an evaluation of 3 or greater was considered to be within an acceptable range. The evaluation results for each of the Examples and the Comparative Examples are given in Table 2 to Table 7.
5: coating was possible for all substrates without cissing occurring.
4: cissing occurred for corona-treated PET substrate, but other substrates could be coated without cissing occurring.
3: cissing occurred for corona-treated PET substrate and corona-treated NY substrate, but other substrates could be coated without cissing occurring.
2: cissing occurred for corona-treated PET substrate, corona-treated NY substrate, and corona treatment-free PET substrate, but corona treatment-free NY substrate could be coated without cissing occurring.
1: cissing occurred for all substrates.

It was considered that there was cissing when there was part where a substrate was not wetted with undercoat in an image with a x10 objective lens in a VK9500 violet laser microscope (Keyence Corporation).

### <Method for measurement of adhesion>

A solid image was printed (exposure for semi-curing 40 W/cm²) and completely cured on an undercoated but corona treatment-free PET substrate and an undercoated but corona treatment-free NY substrate, 1 cm wide Sellotape (registered trademark) was affixed to the sample thus obtained, and the peel-off force (force required to start peel off: N/cm, peel-off speed: 300 mm/min) between the substrate and the undercoat liquid layer was measured using a ZTS series standard digital force gauge manufactured by IMADA, an MX2 series vertical motorized test stand, and a P90-200N/200N-EZ 90° peel-off test jig with an FC series film chuck.

The evaluation result was judged on the basis that the higher the peel strength, the better the adhesion. The evaluation results for each of the Examples and the Comparative Examples are given in Table 2 to Table 7.
5: both PET and NY substrates had a peel strength of at least 0.5 N
4: NY substrate had a peel strength of at least 0.5 N but PET substrate had a peel strength of at least 0.3 N/cm but less than 0.5 N/cm
3: both PET and NY substrates had a peel strength of at least 0.3 N/cm but less than 0.5 N/cm
2: both PET and NY substrates had a peel strength of at least 0.1 N/cm but less than 0.3 N/cm
1: both PET and NY substrates had a peel strength of less than 0.1 N/cm

### <Evaluation of blocking>

In the image formation method, PET was superimposed on a completely cured undercoated PET substrate without discharging the ink composition, a weight of 1 kg was placed thereon for 1 minute, and the state when the superimposed PET was peeled off was evaluated. Evaluation was carried out based on the three levels below; an evaluation of 2 or greater was considered to be within an acceptable range. The evaluation results for each of the Examples and the Comparative Examples are given in Table 2 to Table 7.
3: there was no material transferred to the PET, and there was no sound when peeling off.
2: there was no material transferred to the PET, but there was a sound when peeling off.
1: material was transferred to the PET.

**(Table 2)**

| | | | Example | | | | | | | | | | | | |
|---|---|---|---|---|---|---|---|---|---|---|---|---|---|---|---|
| No. | | | 1 | 2 | 3 | 4 | 5 | 6 | 7 | 8 | 9 | 10 | 11 | 12 | 13 |
| Component B | b1 | SR606 | 10 | - | - | - | - | - | - | - | - | - | - | - | - |
| | | SR344 | - | 10 | - | - | - | - | - | - | - | - | - | - | - |
| | | SR272 | - | - | 10 | - | - | - | - | - | - | - | - | - | - |
| | | SR230 | - | - | - | 10 | - | - | - | - | - | - | - | - | - |
| | | SR444 | - | - | - | - | 10 | - | - | - | - | - | 10 | 10 | 10 |
| | | SR508 | - | - | - | - | - | 10 | - | - | - | - | - | - | - |
| | | SR306 | - | - | - | - | - | - | 10 | - | - | - | - | - | - |
| | | SR399 | - | - | - | - | - | - | - | 10 | - | - | - | - | - |
| | | TPGDA | - | - | - | - | - | - | - | - | 10 | - | - | - | - |
| | | SR295 | - | - | - | - | - | - | - | - | - | 10 | - | - | - |
| | b2 | SR351 | - | - | - | - | - | - | - | - | - | - | - | - | - |
| | | ADP600 | - | - | - | - | - | - | - | - | - | - | - | - | - |
| | | SR341 | 69.8 | 69.8 | 69.8 | 69.8 | 69.8 | 69.8 | 69.8 | 69.8 | 69.8 | 69.8 | 59.8 | 59.8 | 59.8 |
| | | SR238 | - | - | - | - | - | - | - | - | - | - | - | - | - |
| | | TMPTA | - | - | - | - | - | - | - | - | - | - | - | - | - |
| | | SR9003 | - | - | - | - | - | - | - | - | - | - | - | - | - |
| | | A-DPH | - | - | - | - | - | - | - | - | - | - | - | - | - |
| | | NDA | - | - | - | - | - | - | - | - | - | - | - | - | - |
| Component A | | TM550 | - | - | - | - | - | - | - | - | - | - | - | - | - |
| | | XC233-2 | - | - | - | - | - | - | - | - | - | - | - | - | - |
| | | Takenate D103H | - | - | - | - | - | - | - | - | - | - | - | - | - |
| | | Takenate D204 | - | - | - | - | - | - | - | - | - | - | - | - | - |
| | | Takenate D160N | - | - | - | - | - | - | - | - | - | - | - | - | - |
| | | Takenate D165N | - | - | - | - | - | - | - | - | - | - | - | - | - |
| | | Takenate D170N | 15 | 15 | 15 | 15 | 15 | 15 | 15 | 15 | 15 | 15 | 15 | 15 | 15 |
| | | Takenate D178NL | - | - | - | - | - | - | - | - | - | - | - | - | - |
| | | Takenate D110NL | - | - | - | - | - | - | - | - | - | - | - | - | - |
| Component D D | Acrylic resin | BR113 | - | - | - | - | - | - | - | - | - | - | 10 | - | - |
| | Polyester resin | LTH | - | - | - | - | - | - | - | - | - | - | - | 10 | - |
| Component E E | Urethane oligomer | CN9006NS | - | - | - | - | - | - | - | - | - | - | - | - | - |
| | Epoxy oligomer | CN2003 | - | - | - | - | - | - | - | - | - | - | - | - | 10 |
| Component C | | Irg819 | 4 | 4 | 4 | 4 | 4 | 4 | 4 | 4 | 4 | 4 | 4 | 4 | 4 |
| | | Irg369 | - | - | - | - | - | - | - | - | - | - | - | - | - |
| Surfactant | | BYK307 | 1 | 1 | 1 | 1 | 1 | 1 | 1 | 1 | 1 | 1 | 1 | 1 | 1 |
| Polymerization inhibitor | | UV-22 | 0.2 | 0.2 | 0.2 | 0.2 | 0.2 | 0.2 | 0.2 | 0.2 | 0.2 | 0.2 | 0.2 | 0.2 | 0.2 |
| Total | | | 100 | 100 | 100 | 100 | 100 | 100 | 100 | 100 | 100 | 100 | 100 | 100 | 100 |
| Evaluation | | Coating properties | 5 | 5 | 5 | 5 | 5 | 4 | 4 | 4 | 3 | 3 | 5 | 5 | 5 |
| | | Adhesion | 5 | 5 | 5 | 5 | 5 | 4 | 4 | 4 | 3 | 3 | 5 | 5 | 5 |
| | | Blocking | 2 | 2 | 2 | 2 | 2 | 2 | 2 | 2 | 2 | 2 | 3 | 3 | 3 |

**(Table 3)**

| | | | Example | | Comparative Example | | | | | | | | | | |
|---|---|---|---|---|---|---|---|---|---|---|---|---|---|---|---|
| No. | | | 14 | 15 | 1 | 2 | 3 | 4 | 5 | 6 | 7 | 8 | 9 | 10 | 11 |
| Component B | b1 | SR606 | - | - | - | - | - | - | - | - | - | - | - | - | - |
| | | SR344 | - | - | - | - | - | - | - | - | - | - | - | - | - |
| | | SR272 | - | - | - | - | - | - | - | - | - | - | - | - | - |
| | | SR230 | - | - | - | - | - | - | - | - | - | - | - | - | - |
| | | SR444 | 10 | 10 | - | - | - | - | - | - | - | - | 10 | 10 | 3 |
| | | SR508 | - | - | - | - | - | - | - | - | - | - | - | - | - |
| | | SR306 | - | - | - | - | - | - | - | - | - | - | - | - | - |
| | | SR399 | - | - | - | - | - | - | - | - | - | - | - | - | - |
| | | TPGDA | - | - | - | - | - | - | - | - | - | - | - | - | - |
| | | SR295 | - | - | - | - | - | - | - | - | - | - | - | - | - |
| | b2 | SR351 | - | - | 10 | - | - | - | - | - | - | - | - | - | - |
| | | ADP600 | - | - | - | 10 | - | - | - | - | - | - | - | - | - |
| | | SR341 | 49.8 | 49.8 | 69.8 | 69.8 | 79.8 | 69.8 | 69.8 | 69.8 | 69.8 | 69.8 | 74.8 | 74.8 | 76.8 |
| | | SR238 | - | - | - | - | - | 10 | - | - | - | - | - | - | - |
| | | TMPTA | - | - | - | - | - | - | 10 | - | - | - | - | - | - |
| | | SR9003 | - | - | - | - | - | - | - | 10 | - | - | - | - | - |
| | | A-DPH | - | - | - | - | - | - | - | - | 10 | - | - | - | - |
| | | NDA | - | - | - | - | - | - | - | - | - | 10 | - | - | - |
| Component A | | TM550 | - | - | - | - | - | - | - | - | - | - | - | - | - |
| | | XC233-2 | - | - | - | - | - | - | - | - | - | - | - | - | - |
| | | Takenate D103H | - | - | - | - | - | - | - | - | - | - | - | - | - |
| | | Takenate D204 | - | - | - | - | - | - | - | - | - | - | - | - | - |
| | | Takenate D160N | - | - | - | - | - | - | - | - | - | - | - | - | - |
| | | Takenate D165N | - | - | - | - | - | - | - | - | - | - | - | - | - |
| | | Takenate D170N | 15 | 15 | 15 | 15 | 15 | 15 | 15 | 15 | 15 | 15 | - | - | 15 |
| | | Takenate D178NL | - | - | - | - | - | - | - | - | - | - | - | - | - |
| | | Takenate D110NL | - | - | - | - | - | - | - | - | - | - | - | - | - |
| Component D | Acrylic resin | BR113 | 10 | 10 | - | - | - | - | - | - | - | - | 10 | - | - |
| | Polyester resin | LTH | - | - | - | - | - | - | - | - | - | - | - | 10 | - |
| Component E | Urethane oligomer | CN9006NS | 10 | 10 | - | - | - | - | - | - | - | - | - | - | - |
| | Epoxy oligomer | CN2003 | - | - | - | - | - | - | - | - | - | - | - | - | - |
| Component C | | Irg819 | 4 | - | 4 | 4 | 4 | 4 | 4 | 4 | 4 | 4 | 4 | 4 | 4 |
| | | Irg369 | - | 4 | - | - | - | - | - | - | - | - | - | - | - |
| Surfactant | | BYK307 | 1 | 1 | 1 | 1 | 1 | 1 | 1 | 1 | 1 | 1 | 1 | 1 | 1 |
| Polymerization inhibitor | | UV-22 | 0.2 | 0.2 | 0.2 | 0.2 | 0.2 | 0.2 | 0.2 | 0.2 | 0.2 | 0.2 | 0.2 | 0.2 | 0.2 |
| Total | | | 100 | 100 | 100 | 100 | 100 | 100 | 100 | 100 | 100 | 100 | 100 | 100 | 100 |
| Evaluation | | Coating properties | 4 | 4 | 2 | 2 | 2 | 1 | 1 | 1 | 1 | 1 | 5 | 5 | 1 |
| | | Adhesion | 5 | 3 | 2 | 2 | 2 | 1 | 1 | 1 | 1 | 1 | 1 | 1 | 2 |
| | | Blocking | 3 | 2 | 2 | 2 | 2 | 2 | 2 | 2 | 2 | 2 | 3 | 3 | 2 |

**(Table 4)**

| | | | Example | | | | | | | | | | | | |
|---|---|---|---|---|---|---|---|---|---|---|---|---|---|---|---|
| No. | | | 16 | 17 | 18 | 19 | 20 | 21 | 22 | 23 | 24 | 25 | 26 | 27 | 28 |
| Component B | b1 | SR606 | - | - | - | - | - | - | - | - | - | - | - | - | - |
| | | SR344 | - | - | - | - | - | - | - | - | - | - | - | - | - |
| | | SR272 | - | - | - | - | - | - | - | - | - | - | - | - | - |
| | | SR230 | - | - | - | - | - | - | - | - | - | - | - | - | - |
| | | SR444 | 10 | 10 | 10 | 10 | 10 | 10 | 10 | 10 | 10 | 10 | 10 | 10 | 10 |
| | | SR508 | - | - | - | - | - | - | - | - | - | - | - | - | - |
| | | SR306 | - | - | - | - | - | - | - | - | - | - | - | - | - |
| | | SR399 | - | - | - | - | - | - | - | - | - | - | - | - | - |
| | | TPGDA | - | - | - | - | - | - | - | - | - | - | - | - | - |
| | | SR295 | - | - | - | - | - | - | - | - | - | - | - | - | - |
| | b2 | SR351 | - | - | - | - | - | - | - | - | - | - | - | - | - |
| | | ADP600 | - | - | - | - | - | - | - | - | - | - | - | - | - |
| | | SR341 | 67.8 | 64.8 | 49.8 | 39.8 | 59.8 | 67.8 | 64.8 | 59.8 | 49.8 | 39.8 | 49.8 | 49.8 | 49.8 |
| | | SR238 | - | - | - | - | - | - | - | - | - | - | - | - | - |
| | | TMPTA | - | - | - | - | - | - | - | - | - | - | - | - | - |
| | | SR9003 | - | - | - | - | - | - | - | - | - | - | - | - | - |
| | | A-DPH | - | - | - | - | - | - | - | - | - | - | - | - | - |
| | | NDA | - | - | - | - | - | - | - | - | - | - | - | - | - |
| Component A | | TM550 | - | - | - | - | - | - | - | - | - | - | - | - | - |
| | | XC233-2 | - | - | - | - | - | - | - | - | - | - | - | - | - |
| | | Takenate D103H | - | - | - | - | - | - | - | - | - | - | - | - | - |
| | | Takenate D204 | - | - | - | - | - | - | - | - | - | - | - | - | - |
| | | Takenate D160N | - | - | - | - | - | - | - | - | - | - | - | - | - |
| | | Takenate D165N | - | - | - | - | - | - | - | - | - | - | - | - | - |
| | | Takenate D170N | 15 | 15 | 15 | 15 | 15 | 15 | 15 | 15 | 15 | 15 | 15 | 15 | 15 |
| | | Takenate D178NL | - | - | - | - | - | - | - | - | - | - | - | - | - |
| | | Takenate D110NL | - | - | - | - | - | - | - | - | - | - | - | - | - |
| Com- ponen t D | Acrylic resin | BR113 | 2 | 5 | 20 | 30 | - | - | - | - | - | - | - | 10 | - |
| | Polyester resin | LTH | - | - | - | - | 10 | - | - | - | - | - | 10 | - | 10 |
| Com- ponent E | Urethane oligomer | CN9006NS | - | - | - | - | - | 2 | 5 | 10 | 20 | 30 | 10 | - | - |
| | Epoxy oligomer | CN2003 | - | - | - | - | - | - | - | - | - | - | - | 10 | 10 |
| Component C | | Irg819 | 4 | 4 | 4 | 4 | 4 | 4 | 4 | 4 | 4 | 4 | 4 | 4 | 4 |
| Surfactant | | BYK307 | 1 | 1 | 1 | 1 | 1 | 1 | 1 | 1 | 1 | 1 | 1 | 1 | 1 |
| Polymerization inhibitor | | UV-22 | 0.2 | 0.2 | 0.2 | 0.2 | 0.2 | 0.2 | 0.2 | 0.2 | 0.2 | 0.2 | 0.2 | 0.2 | 0.2 |
| Total | | | 100 | 100 | 100 | 100 | 100 | 100 | 100 | 100 | 100 | 100 | 100 | 100 | 100 |
| Evaluation | | Coating properties | 5 | 5 | 4 | 4 | 5 | 5 | 5 | 5 | 4 | 4 | 5 | 4 | 4 |
| | | Adhesion | 5 | 5 | 5 | 5 | 5 | 5 | 5 | 5 | 5 | 5 | 5 | 5 | 5 |
| | | Blocking | 2 | 3 | 3 | 3 | 3 | 2 | 3 | 3 | 3 | 3 | 3 | 3 | 3 |

**(Table 5)**

| | | | Example | | | | | | | | | | | Comp. Ex. |
|---|---|---|---|---|---|---|---|---|---|---|---|---|---|---|
| No. | | | 29 | 30 | 31 | 32 | 33 | 34 | 35 | 36 | 37 | 38 | 39 | 12 |
| Component B | b3 | NVC | 20 | 10 | 5 | - | - | - | - | - | - | - | - | 40 |
| | | 4-HBA | - | - | - | 5 | - | - | - | - | - | - | - | - |
| | | SR531 | - | - | - | - | 5 | - | - | - | - | - | - | - |
| | b1 | SR230 | - | - | - | - | - | - | - | - | - | - | - | - |
| | | SR444 | - | - | - | - | - | 5 | 10 | 50 | 70 | 80 | 90 | - |
| | | SR508 | - | - | - | - | - | - | - | - | - | - | - | - |
| | | SR306 | - | - | - | - | - | - | - | - | - | - | - | - |
| | | SR399 | - | - | - | - | - | - | - | - | - | - | - | - |
| | | TPGDA | - | - | - | - | - | - | - | - | - | - | - | - |
| | | SR295 | - | - | - | - | - | - | - | - | - | - | - | - |
| | b2 | SR351 | - | - | - | - | - | - | - | - | - | - | - | - |
| | | ADP600 | - | - | - | - | - | - | - | - | - | - | - | - |
| | | SR341 | 50 | 60 | 65 | 65 | 65 | 65 | 60 | 20 | - | - | - | 41 |
| | | SR238 | - | - | - | - | - | - | - | - | - | - | - | - |
| | | TMPTA | - | - | - | - | - | - | - | - | - | - | - | - |
| | | SR9003 | - | - | - | - | - | - | - | - | - | - | - | - |
| | | A-DPH | - | - | - | - | - | - | - | - | - | - | - | - |
| | | NDA | - | - | - | - | - | - | - | - | - | - | - | - |
| Component A | | TM550 | - | - | - | - | - | - | - | - | - | - | - | - |
| | | XC233-2 | - | - | - | - | - | - | - | - | - | - | - | - |
| | | Takenate D103H | - | - | - | - | - | - | - | - | - | - | - | - |
| | | Takenate D204 | - | - | - | - | - | - | - | - | - | - | - | - |
| | | Takenate D160N | - | - | - | - | - | - | - | - | - | - | - | - |
| | | Takenate D165N | - | - | - | - | - | - | - | - | - | - | - | - |
| | | Takenate D170N | 14.8 | 14.8 | 14.8 | 14.8 | 14.8 | 14.8 | 14.8 | 14.8 | 14.8 | 14.8 | 4.8 | 14.8 |
| | | Takenate D178NL | - | - | - | - | - | - | - | - | - | - | - | - |
| | | Takenate D110NL | - | - | - | - | - | - | - | - | - | - | - | - |
| Component D | Acrylic resin | BR113 | 10 | 10 | 10 | 10 | 10 | 10 | 10 | 10 | 10 | - | - | - |
| | Polyester resin | LTH | - | - | - | - | - | - | - | - | - | - | - | - |
| Component E | Urethane oligomer | CN9006NS | - | - | - | - | - | - | - | - | - | - | - | - |
| | Epoxy oligomer | CN2003 | - | - | - | - | - | - | - | - | - | - | - | - |
| Component C | | Irg819 | 4 | 4 | 4 | 4 | 4 | 4 | 4 | 4 | 4 | 4 | 4 | 4 |
| Surfactant | | BYK307 | 1 | 1 | 1 | 1 | 1 | 1 | 1 | 1 | 1 | 1 | 1 | - |
| Polymerization inhibitor | | UV-22 | 0.2 | 0.2 | 0.2 | 0.2 | 0.2 | 0.2 | 0.2 | 0.2 | 0.2 | 0.2 | 0.2 | 0.2 |
| Total | | | 100 | 100 | 100 | 100 | 100 | 100 | 100 | 100 | 100 | 100 | 100 | 100 |
| Evaluation | | Coating properties | 5 | 5 | 5 | 5 | 5 | 3 | 5 | 5 | 5 | 5 | 5 | 5 |
| | | Adhesion | 5 | 5 | 5 | 5 | 5 | 5 | 5 | 5 | 5 | 5 | 3 | 1 |
| | | Blocking | 2 | 2 | 2 | 2 | 2 | 3 | 3 | 3 | 3 | 2 | 3 | 1 |

**(Table 6)**

| | | | Example | | | | | | | | | | |
|---|---|---|---|---|---|---|---|---|---|---|---|---|---|
| No. | | | 40 | 41 | 42 | 43 | 44 | 45 | 46 | 47 | 48 | 49 | 50 |
| Component B | b1 | SR606 | - | - | - | - | - | - | - | - | - | - | - |
| | | SR344 | - | - | - | - | - | - | - | - | - | 20 | - |
| | | SR272 | - | - | - | - | - | - | - | - | - | - | - |
| | | SR230 | - | - | - | - | - | - | - | - | - | - | - |
| | | SR444 | 10 | 10 | 10 | 10 | 10 | 10 | 10 | 10 | 10 | - | 10 |
| | | SR508 | - | - | - | - | - | - | - | - | - | - | - |
| | | SR306 | - | - | - | - | - | - | - | - | - | - | - |
| | | SR399 | - | - | - | - | - | - | - | - | - | - | - |
| | | TPGDA | - | - | - | - | - | - | - | - | - | - | - |
| | | SR295 | - | - | - | - | - | - | - | - | - | - | - |
| | b1 + b2 | M-403 | - | - | - | - | - | - | - | - | - | - | - |
| | b2 | SR351 | - | - | - | - | - | - | - | - | - | - | - |
| | | ADP600 | - | - | - | - | - | - | - | - | - | - | - |
| | | SR341 | 69.8 | 64.8 | 54.8 | 44.8 | 34.8 | 63.3 | 61.8 | 58.8 | 53.8 | 39.8 | 69.8 |
| | | SR238 | - | - | - | - | - | - | - | - | - | - | - |
| | | TMPTA | - | - | - | - | - | - | - | - | - | - | - |
| | | SR9003 | - | - | - | - | - | - | - | - | - | - | - |
| | | A-DPH | - | - | - | - | - | - | - | - | - | 20 | - |
| | | NDA | - | - | - | - | - | - | - | - | - | - | - |
| Component A | | TM550 | - | - | - | - | - | - | - | - | - | - | - |
| | | XC233-2 | - | - | - | - | - | - | - | - | - | - | - |
| | | Takenate D103H | - | - | - | - | - | - | - | - | - | - | 15 |
| | | Takenate D204 | - | - | - | - | - | - | - | - | - | - | - |
| | | Takenate D160N | - | - | - | - | - | - | - | - | - | - | - |
| | | Takenate D165N | - | - | - | - | - | - | - | - | - | - | - |
| | | Takenate D170N | 5 | 10 | 20 | 30 | 40 | 15 | 15 | 15 | 15 | 15 | - |
| | | Takenate D178NL | - | - | - | - | - | - | - | - | - | - | - |
| | | Takenate D110NL | - | - | - | - | - | - | - | - | - | - | - |
| Polyol compound | | CAT-RT-37-2K | - | - | - | - | - | - | - | - | - | - | - |
| | | XA126-1 | - | - | - | - | - | - | - | - | - | - | - |
| Component D | Acrylic resin | BR113 | 10 | 10 | 10 | 10 | 10 | 10 | 10 | 10 | 10 | - | - |
| | Polyester resin | LTH | - | - | - | - | - | - | - | - | - | - | - |
| Component E | Urethane oligomer | CN9006NS | - | - | - | - | - | - | - | - | - | - | - |
| | Epoxy oligomer | CN2003 | - | - | - | - | - | - | - | - | - | - | - |
| Component C | | Irg819 | 4 | 4 | 4 | 4 | 4 | 0.5 | 2 | 5 | 10 | 4 | 4 |
| Surfactant | | BYK307 | 1 | 1 | 1 | 1 | 1 | 1 | 1 | 1 | 1 | 1 | 1 |
| Polymerization inhibitor | | UV-22 | 0.2 | 0.2 | 0.2 | 0.2 | 0.2 | 0.2 | 0.2 | 0.2 | 0.2 | 0.2 | 0.2 |
| Total | | | 100 | 100 | 100 | 100 | 100 | 100 | 100 | 100 | 100 | 100 | 100 |
| Evaluation | | Coating properties | 5 | 5 | 5 | 5 | 4 | 5 | 5 | 5 | 5 | 5 | 5 |
| | | Adhesion | 3 | 4 | 5 | 5 | 5 | 5 | 5 | 5 | 4 | 5 | 5 |
| | | Blocking | 3 | 3 | 3 | 3 | 2 | 2 | 3 | 3 | 2 | 2 | 2 |

**(Table 7)**

| | | | Example | | | | | | | | Comp. Ex. |
|---|---|---|---|---|---|---|---|---|---|---|---|
| No. | | | 51 | 52 | 53 | 54 | 55 | 56 | 57 | 58 | 13 |
| Component B | b1 | SR606 | - | - | - | - | - | - | - | - | - |
| | | SR344 | - | - | - | - | - | - | - | - | - |
| | | SR272 | - | - | - | - | - | - | - | - | - |
| | | SR230 | - | - | - | - | - | - | - | - | - |
| | | SR444 | 10 | 10 | 10 | 10 | 10 | 10 | 10 | - | - |
| | | SR508 | - | - | - | - | - | - | - | - | - |
| | | SR306 | - | - | - | - | - | - | - | - | - |
| | | SR399 | - | - | - | - | - | - | - | - | - |
| | | TPGDA | - | - | - | - | - | - | - | - | - |
| | | SR295 | - | - | - | - | - | - | - | - | - |
| | b1 + b2 | M-403 | - | - | - | - | - | - | - | 10 | 5 |
| | b2 | SR351 | - | - | - | - | - | - | - | - | - |
| | | ADP600 | - | - | - | - | - | - | - | - | - |
| | | SR341 | 69.8 | 69.8 | 69.8 | 69.8 | 69.8 | 54.8 | 62.3 | 69.8 | 74.8 |
| | | SR238 | - | - | - | - | - | - | - | - | - |
| | | TMPTA | - | - | - | - | - | - | - | - | - |
| | | SR9003 | - | - | - | - | - | - | - | - | - |
| | | A-DPH | - | - | - | - | - | - | - | - | - |
| | | NDA | - | - | - | - | - | - | - | - | - |
| Component A | | TM550 | - | - | - | - | - | 15 | - | - | - |
| | | XC233-2 | - | - | - | - | - | - | 15 | - | - |
| | | Takenate D103H | - | - | - | - | - | - | - | - | - |
| | | Takenate D204 | 15 | - | - | - | - | - | - | - | - |
| | | Takenate D160N | - | 15 | - | - | - | - | - | - | - |
| | | Takenate D165N | - | - | 15 | - | - | - | - | - | - |
| | | Takenate D170N | - | - | - | - | - | - | - | 15 | 15 |
| | | Takenate D178NL | - | - | - | 15 | - | - | - | - | - |
| | | Takenate D110NL | - | - | - | - | 15 | - | - | - | - |
| Polyol compound | | CAT-RT-37-2K | - | - | - | - | - | 15 | - | - | - |
| | | XA126-1 | - | - | - | - | - | - | 7.5 | - | - |
| Component D | Acrylic resin | BR113 | - | - | - | - | - | - | - | - | - |
| | Polyester resin | LTH | - | - | - | - | - | - | - | - | - |
| Component E | Urethane oligomer | CN9006NS | - | - | - | - | - | - | - | - | - |
| | Epoxy oligomer | CN2003 | - | - | - | - | - | - | - | - | - |
| Component C | | Irg819 | 4 | 4 | 4 | 4 | 4 | 4 | 4 | 4 | 4 |
| Surfactant | | BYK307 | 1 | 1 | 1 | 1 | 1 | 1 | 1 | 1 | 1 |
| Polymerization inhibitor | | UV-22 | 0.2 | 0.2 | 0.2 | 0.2 | 0.2 | 0.2 | 0.2 | 0.2 | 0.2 |
| Total | | | 100 | 100 | 100 | 100 | 100 | 100 | 100 | 100 | 100 |
| Evaluation | | Coating properties | 5 | 5 | 5 | 5 | 5 | 5 | 5 | 5 | 1 |
| | | Adhesion | 5 | 5 | 5 | 5 | 5 | 5 | 5 | 5 | 2 |
| | | Blocking | 2 | 2 | 2 | 2 | 2 | 2 | 2 | 2 | 2 |

**(Table 8)**

| Ink composition No. | | 1 | 2 | 3 | 4 | 5 |
|---|---|---|---|---|---|---|
| Color of ink composition | | Cyan | Magenta | Yellow | Black | White |
| Monomer | SR341 | 74.1 | 67.6 | 73.1 | 77.6 | 53.6 |
| | SR344 | 10 | 10 | 10 | 10 | 10 |
| Initiator | Irg819 | 4 | 4 | 4 | 4 | 4 |
| | Speedcure7010 | 2 | 2 | 2 | 2 | 2 |
| Mill base | Cyan mill base | 9.5 | - | - | - | - |
| | Magenta mill base | - | 16 | - | - | - |
| | Yellow mill base | - | - | 10.5 | - | - |
| | Black mill base | - | - | - | 6 | - |
| | White mill base | - | - | - | - | 30 |
| Polymerization inhibitor | UV-22 | 0.3 | 0.3 | 0.3 | 0.3 | 0.3 |
| Surfactant | BYK307 | 0.1 | 0.1 | 0.1 | 0.1 | 0.1 |
| Total | | 100 | 100 | 100 | 100 | 100 |

## Claims

1. An undercoat composition comprising
an isocyanate group-containing compound as Component A,
a radically polymerizable monomer containing at least b1 or b3 below as Component B,
a photopolymerization initiator as Component C, and
a surfactant in a content of 0.001 to 2 mass% relative to the entire mass of the undercoat composition,
wherein the total content of b1 and b2 is 50 to 90 mass% relative to the total solids content mass of the undercoat composition, and the total content of b1 and b3 is 5 to 90 mass% relative to the total solids content mass of the undercoat composition,
b1: a polyfunctional radically polymerizable monomer having a Log P value of no greater than 2.0,
b2: a polyfunctional radically polymerizable monomer having a Log P value of greater than 2.0, and
b3: a monofunctional radically polymerizable monomer having a Log P value of no greater than 2.0.

2. The undercoat composition according to Claim 1, wherein b1 or b3 is a hydroxy group-containing radically polymerizable monomer.

3. The undercoat composition according to Claim 1 or 2, wherein Component A is a diisocyanate compound.

4. The undercoat composition according to any one of Claims 1 to 3, wherein Component A has a content of 5 to 40 mass% relative to the total solids content mass of the undercoat composition.

5. The undercoat composition according to any one of Claims 1 to 4, wherein Component C is a phosphine oxide compound.

6. The undercoat composition according to any one of Claims 1 to 5, wherein the undercoat composition further comprises a binder polymer as Component D.

7. The undercoat composition according to any one of Claims 1 to 6, wherein the undercoat composition further comprises a polymerizable oligomer as Component E.

8. The undercoat composition according to Claim 6, wherein Component D is an acrylic resin or a polyester resin.

9. The undercoat composition according to Claim 7, wherein Component E is a urethane acrylate oligomer or an epoxy acrylate oligomer.

10. The undercoat composition according to any one of Claims 1 to 5, wherein the undercoat composition comprises a binder polymer as Component D and a polymerizable oligomer as Component E, Component D and Component E having a total content of 2 to 30 mass% relative to the total solids content mass of the undercoat composition.

11. The undercoat composition according to any one of Claims 1 to 10, wherein the surfactant is a polyether-modified polysiloxane compound.

12. A composition set for use in production of the undercoat composition according to any one of Claims 1 to 11, the composition set comprising
Composition 1 comprising Component A, and
Composition 2 comprising Component B and Component C.

13. An inkjet recording method comprising, in order,
an application step of providing an undercoat layer by applying the undercoat composition according to any one of Claims 1 to 11 to a recording medium as step a,
an image formation step of discharging an ink composition onto the undercoat layer as step b, and
a curing step of irradiating the undercoat layer and the ink composition with actinic radiation so as to carry out curing as step c,
the ink composition comprising a radically polymerizable monomer, a radical polymerization initiator, and a colorant.

14. The inkjet recording method according to Claim 13, wherein a polyfunctional ethylenically unsaturated compound in the undercoat composition has a content of at least 70 mass% relative to the total content of Component B, and a polyfunctional ethylenically unsaturated compound in the ink composition has a content of at least 70 mass% relative to the total content of the radically polymerizable monomer.

15. A printed material comprising, in order above a printed material obtained by the inkjet recording method according to Claim 13 or 14, an adhesive layer and a laminate film.

16. Use of the undercoat composition according to any one of Claims 1 to 11 in the inkjet recording method according to Claim 12 or 13.

## Patentansprüche

1. Grundierungszusammensetzung umfassend
eine eine Isocyanatgruppe enthaltende Verbindung als Komponente A,
ein radikalisch polymerisierbares Monomer enthaltend mindestens b1 oder b3 wie nachstehend als Komponente B,
einen Photopolymerisationsinitiator als Komponente C und
ein Tensid in einer Menge von 0,001 bis 2 Masse%, bezogen auf die Gesamtmasse der Grundierungszusammensetzung,
wobei der Gesamtgehalt an b1 und b2 50 bis 90 Masse%, bezogen auf die Gesamtfeststoffgehaltmasse der Grundierungszusammensetzung beträgt und der Gesamtgehalt an b1 und b3 5 bis 90 Masse%, bezogen auf die Gesamtfeststoffgehaltmasse der Grundierungszusammensetzung beträgt,
b1: ein polyfunktionales radikalisch polymerisierbares Monomer mit einem Log P Wert von nicht größer als 2,0,
b2: ein polyfunktionales radikalisch polymerisierbares Monomer mit einem Log P Wert von größer als 2,0 und
b3: ein monofunktionales radikalisch polymerisierbares Monomer mit einem Log P Wert von nicht größer als 2,0.

2. Grundierungszusammensetzung nach Anspruch 1, wobei b1 oder b3 ein eine Hydroxygruppe enthaltendes radikalisch polymerisierbares Monomer ist.

3. Grundierungszusammensetzung nach Anspruch 1 oder 2, wobei die Komponente A eine Diisocyanatverbindung ist.

4. Grundierungszusammensetzung nach einem der Ansprüche 1 bis 3, wobei Komponente A einen Gehalt von 5 bis 40 Masse%, bezogen auf die Gesamtfeststoffgehaltmasse der Grundierungszusammensetzung hat.

5. Grundierungszusammensetzung nach einem der Ansprüche 1 bis 4, wobei die Komponente C eine Phosphinoxidverbindung ist.

6. Grundierungszusammensetzung nach einem der Ansprüche 1 bis 5, wobei die Grundierungszusammensetzung ferner ein Bindemittelpolymer als Komponente D enthält.

7. Grundierungszusammensetzung nach einem der Ansprüche 1 bis 6, wobei die Grundierungszusammensetzung ferner ein polymerisierbares Oligomer als Komponente E enthält.

8. Grundierungszusammensetzung nach Anspruch 6, wobei Komponente D ein Acrylharz oder ein Polyesterharz ist.

9. Grundierungszusammensetzung nach Anspruch 7, wobei Komponente E ein Urethanacrylatoligomer oder ein Epoxidacrylatoligomer ist.

10. Grundierungszusammensetzung nach einem der Ansprüche 1 bis 5, wobei die Grundierungszusammensetzung ein Bindemittelpolymer als Komponente D und ein polymerisierbares Oligomer als Komponente E enthält, wobei Komponente D und Komponente E einen Gesamtgehalt von 2 bis 30 Masse%, bezogen auf die Gesamtfeststoffgehaltmasse der Grundierungszusammensetzung haben.

11. Grundierungszusammensetzung nach einem der Ansprüche 1 bis 10, wobei das Tensid eine Polyether-modifizierte Polysiloxanverbindung ist.

12. Ein Zusammensetzungsset zur Verwendung in der Herstellung der Grundierungszusammensetzung nach einem der Ansprüche 1 bis 11, wobei das Zusammensetzungsset
Zusammensetzung 1, enthaltend Komponente A und
Zusammensetzung 2, enthaltend Komponente B und Komponente C umfasst.

13. Tintenstrahlaufzeichnungsverfahren umfassend in dieser Reihenfolge, einen Applikationsschritt des Bereitstellens einer Grundierungsschicht durch Aufbringen der Grundierungszusammensetzung nach einem der Ansprüche 1 bis 11 aus ein Aufzeichnungsmedium als Schritt a,
einen Bilderzeugungsschritt des Ausstoßens einer Tintenzusammensetzung auf die Grundierungsschicht als Schritt b und
einen Härtungsschritt des Belichtens der Grundierungsschicht und der Tintenzusammensetzung mit aktinischer Strahlung, um ein Härten als Schritt c auszuführen,
wobei die Tintenzusammensetzung ein radikalisch polymerisierbares Monomer, einen radikalischen Polymerisationsinitiator und ein Färbemittel enthält.

14. Tintenstrahlaufzeichnungsverfahren nach Anspruch 13, wobei eine polyfunktionale ethylenisch ungesättigte Verbindung in der Grundierungszusammensetzung einen Gehalt von mindestens 70 Masse%, bezogen auf den Gesamtgehalt an Komponente B hat, und eine polyfunktionale ethylenisch ungesättigte Verbindung in der Tintenzusammensetzung einen Gehalt von mindestens 70 Masse%, bezogen auf den Gesamtgehalt an dem radikalisch polymerisierbaren Monomer hat.

15. Gedrucktes Material umfassend in der oben genannten Reihenfolge ein gedrucktes Material, erhalten durch das Tintenstrahlaufzeichnungsverfahren nach Anspruch 13 oder 14, eine Klebeschicht und einen Laminatfilm.

16. Verwendung der Grundierungszusammensetzung nach einem der Ansprüche 1 bis 11 in dem Tintenstrahlaufzeichnungsverfahren nach Anspruch 12 oder 13.

## Revendications

1. Composition de sous-couche, comprenant :
un composé contenant un groupe isocyanate comme composant A ;
un monomère pouvant subir une polymérisation par radicaux contenant au moins b1 ou b3 ci-dessous comme composant B ;
un initiateur de photopolymérisation comme composant C, et
un surfactant avec une teneur allant de 0,001 à 2 % en masse par rapport à la masse entière de la composition de sous-couche ;
dans laquelle la teneur totale de b1 et b2 s'étend de 50 à 90 % en masse par rapport à la teneur massique de matière sèche totale de la composition de sous-couche, et la teneur totale de b1 et b3 s'étend de 5 à 90 % en masse par rapport à la teneur massique de matière sèche totale de la composition de sous-couche ;
b1 : un monomère polyfonctionnel pouvant subir une polymérisation par radicaux présentant une valeur Log P non supérieure à 2,0 ;
b2 : un monomère polyfonctionnel pouvant subir une polymérisation par radicaux présentant une valeur Log P supérieure à 2,0, et
b3 : un monomère monofonctionnel pouvant subir une polymérisation par radicaux présentant une valeur Log P non supérieure à 2,0.

2. Composition de sous-couche selon la revendication 1, dans laquelle b1 ou b3 est un monomère pouvant subir une polymérisation par radicaux contenant un groupe hydroxy.

3. Composition de sous-couche selon la revendication 1 ou 2, dans laquelle le composant A est un composé diisocyanate.

4. Composition de sous-couche selon l'une quelconque des revendications 1 à 3, dans laquelle le composant A présente une teneur allant de 5 à 40 % en masse par rapport à la teneur massique de matière sèche totale de la composition de sous-couche.

5. Composition de sous-couche selon l'une quelconque des revendications 1 à 4, dans laquelle le composant C est un composé d'oxyde de phosphine.

6. Composition de sous-couche selon l'une quelconque des revendications 1 à 5, dans laquelle la composition de sous-couche comprend en outre un polymère liant comme composant D.

7. Composition de sous-couche selon l'une quelconque des revendications 1 à 6, dans laquelle la composition de sous-couche comprend en outre un oligomère pouvant subir une polymérisation comme composant E.

8. Composition de sous-couche selon la revendication 6, dans laquelle le composant D est une résine acrylique ou une résine de polyester.

9. Composition de sous-couche selon la revendication 7, dans laquelle le composant E est un oligomère d'acrylate d'uréthane ou un oligomère d'acrylate d'époxy.

10. Composition de sous-couche selon l'une quelconque des revendications 1 à 5, dans laquelle la composition de sous-couche comprend un polymère liant comme composant D et un oligomère polymérisable comme composant E, le composant D et le composant E présentant une teneur totale de 2 à 30 % en masse par rapport à la teneur massique de matière sèche totale de la composition de sous-couche.

11. Composition de sous-couche selon l'une quelconque des revendications 1 à 10, dans laquelle le surfactant est un composé de polysiloxane modifié par un polyéther.

12. Ensemble de composition pour une utilisation lors de la production de la composition de sous-couche selon l'une quelconque des revendications 1 à 11, l'ensemble de composition comprenant :
la composition 1 comprenant le composant A, et
la composition 2 comprenant le composant B et le composant C.

13. Procédé d'enregistrement à jet d'encre, comprenant dans l'ordre les étapes suivantes :
une étape d'application pour fournir une couche formant sous-couche en appliquant la composition de sous-couche selon l'une quelconque des revendications 1 à 11 sur un support d'enregistrement comme étape a ;
une étape de formation d'image pour libérer une composition d'encre sur la couche formant sous-couche comme étape b, et
une étape de durcissement pour irradier la couche formant sous-couche et la composition d'encre avec un rayonnement actinique de manière à réaliser le durcissement comme étape c, et
la composition d'encre comprenant un monomère pouvant subir une polymérisation par radicaux, un initiateur de polymérisation par radicaux, et un colorant.

14. Procédé d'enregistrement à jet d'encre selon la revendication 13, dans laquelle un composé polyfonctionnel éthyléniquement insaturé dans la composition de sous-couche présente une teneur d'au moins 70 % en masse par rapport à la teneur totale de composant B, et un composé polyfonctionnel éthyléniquement insaturé dans la composition de sous-couche présente une teneur d'au moins 70 % en masse par rapport à la teneur totale du monomère pouvant subir une polymérisation par radicaux.

15. Matériau imprimé comprenant, dans l'ordre ci-dessus, un matériau imprimé obtenu par le procédé d'enregistrement à jet d'encre selon la revendication 13 ou 14, une couche d'adhésif, et un film stratifié.

16. Utilisation de la composition de sous-couche selon l'une quelconque des revendications 1 à 11 dans le procédé d'enregistrement à jet d'encre selon la revendication 12 ou 13.
